# EUROPEAN PATENT APPLICATION

(11) **EP 4 810 454 A1**
(43) Date of publication of application: **23.09.2026**
(21) Application number: 24891504.3
(22) Date of filing: 15.11.2024
(51) Int. Cl.: C04B 28/14, C04B 14/10, C04B 24/16, C04B 24/26, C08F 220/12

(54) **CLAY-CONTAINING GYPSUM SLURRY**

(30) Priority: 17.11.2023 JP 2023195633
(71) Applicant: Kao Corporation, Tokyo 103-8210 (JP)
(72) Inventor: SASHIHARA, Yoshiaki, Tokyo 103-8210 (JP); TANAKA, Shunya, Tokyo 103-8210 (JP)
(74) Representative: Hoffmann Eitle
(86) International application number: PCT/JP2024/040651
(87) International publication number: WO 2025/105469

(57) **Abstract**

There is provided a clay-containing gypsum slurry exhibiting excellent water-reducing ability even when clay-containing gypsum is used, having less delay in setting time, and, when containing bubbles, yielding a hardened gypsum product having a large bubble size.

The clay-containing gypsum slurry contains the following component (A), clay-containing gypsum, and water:
component (A): a copolymer containing, as constituent monomers, a specific constituent monomer (A1) represented by the general formula (A1) and a specific constituent monomer (A2) represented by the general formula (A2),
wherein the proportion of constituent monomer (A1) to the total amount of constituent monomers (A1) and (A2) is less than 5 mass%; and
the copolymer has a weight-average molecular weight of 50,000 or more and 250,000 or less.

## Description

### Field of the Invention

The present invention relates to a dispersant for a clay-containing gypsum slurry and a clay-containing gypsum slurry.

### Background of the Invention

In a gypsum slurry used for producing a gypsum board, a naphthalene sulfonic acid-formaldehyde condensate has been used as a dispersant. In recent years, the use of a polycarboxylic-acid-based dispersant has also been increasing from the viewpoint of reducing production costs.

In producing a gypsum board, the gypsum slurry is molded into a plate shape and then dried in a dryer to remove excess water. Therefore, use of a highly water-reducing polycarboxylic-acid-based dispersant is advantageous in that the gypsum slurry can be molded even with a small amount of water, thereby reducing drying costs. As fuels for the dryer, LPG, LNG, coal, petroleum, and the like are used, and with recent increases in fuel prices, the advantage of using a polycarboxylic-acid-based dispersant has been increasing.

JP-A 2022-018729 discloses a dispersant for a clay-containing hydraulic composition, the dispersant containing components (A), (B), and (C), wherein components (A), (B), and (C) are specific polycarboxylic-acid-based polymers that differ from one another, and the ratio of the total content of components (B) and (C) to the total content of components (A), (B), and (C) is 5 mass% or more and 20 mass% or less, the dispersant being capable of imparting excellent flowability to a hydraulic composition even when clay-containing aggregate is used.

### Summary of the Invention

Examples of gypsum used in a gypsum slurry include natural gypsum and byproduct gypsum such as flue gas desulfurization gypsum and the like. In recent years, inexpensive natural gypsum has increasingly been used.

However, natural gypsum contains clay and varies in quality. The present inventors have found that, when natural gypsum and a polycarboxylic-acid-based dispersant are used in a gypsum slurry, the water-reducing ability of the gypsum slurry significantly decreases, and the advantage of allowing molding with a small amount of water, thereby reducing drying costs, cannot be obtained.

The present inventors have also found that, when the amount of polycarboxylic-acid-based dispersant used is increased in order to improve the water-reducing ability of the gypsum slurry, setting of the gypsum slurry is delayed, resulting in reduced productivity.

The present inventors have further found the problem that, when the gypsum slurry contains bubbles, use of a large amount of polycarboxylic-acid-based dispersant having a foam-stabilizing property hinders breakage and coalescence of bubbles in the gypsum slurry, with the result that the bubble size after hardening of the gypsum slurry remains small and the strength of the hardened gypsum product is reduced.

The present invention provides a dispersant for a clay-containing gypsum slurry, the dispersant being capable of imparting excellent water-reducing ability to a gypsum slurry even when clay-containing gypsum is used, suppressing delay in setting time, and, when the gypsum slurry contains bubbles, increasing the bubble size in the hardened gypsum product. The present invention also provides a clay-containing gypsum slurry exhibiting excellent water-reducing ability even when clay-containing gypsum is used, having less delay in setting time, and, when containing bubbles, yielding a hardened gypsum product having a large bubble size.

The present invention relates to a dispersant for a clay-containing gypsum slurry, the dispersant containing the following component (A):
component (A): a copolymer containing, as constituent monomers, constituent monomer (A1) represented by the following general formula (A1) and constituent monomer (A2) represented by the following general formula (A2),
wherein the proportion of constituent monomer (A1) to the total amount of constituent monomers (A1) and (A2) is less than 5 mass%; and
the copolymer has a weight-average molecular weight of 50,000 or more and 250,000 or less: 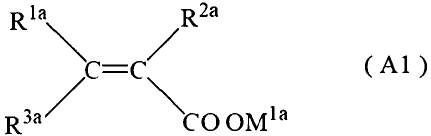 wherein:
   R^{1a}, R^{2a}, and R^{3a} are the same or different, and each represent a hydrogen atom, a methyl group, or (CH₂)ᵣCOOM^{2a}; and when (CH₂)ᵣCOOM^{2a} forms an anhydride with COOM^{1a} or another (CH₂)ᵣCOOM^{2a}, M^{1a} and M^{2a} are absent from those groups;
   M^{1a} and M^{2a} are the same or different, and each represent a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
   r is a number of 0 or more and 2 or less; 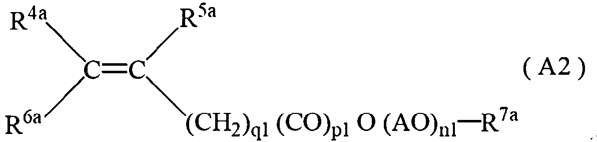 wherein:
      R^{4a} and R^{5a} are the same or different, and each represent a hydrogen atom or a methyl group;
      R^{6a} is a hydrogen atom, a methyl group, (CH₂)ᵣCOOM^{3a}, or (CH₂)_{q1}(CO)ₚ₁O(AO)ₙ₁R^{7a};
      R^{7a} is a hydrogen atom or an alkyl group having 1 or more and 4 or less carbons;
      AO is an alkyleneoxy group having 2 or more and 4 or less carbons;
      n1 is the average number of added moles of AO, the number being 100 or more and 150 or less;
      q1 is a number of 0 or more and 6 or less;
      p1 is 0 or 1;
      M^{3a} is a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
      r is a number of 0 or more and 2 or less.

Further, the present invention relates to a clay-containing gypsum slurry containing component (A), clay-containing gypsum, and water.

Further, the present invention relates to a method for producing a clay-containing gypsum slurry, including the following step 1 and step 2:
<step 1>
   a step of foaming a liquid composition containing (C) a foaming agent and water to obtain a foam; and
<step 2>
   a step of mixing clay-containing gypsum, water, the foam obtained in step 1, and a dispersant for a clay-containing gypsum slurry, the dispersant containing component (A).

Further, the present invention relates to use, in a clay-containing gypsum slurry, of a dispersant containing component (A).

Further, the present invention relates to a method for improving the water-reducing ability of a clay-containing gypsum slurry, including mixing into a clay-containing gypsum slurry a dispersant for a clay-containing gypsum slurry, the dispersant containing component (A).

Further, the present invention relates to an additive kit for a clay-containing gypsum slurry, the kit being composed of a first agent containing component (A) and a second agent containing (C) a foaming agent.

According to the present invention, there is provided a dispersant for a clay-containing gypsum slurry, the dispersant being capable of imparting excellent water-reducing ability to a gypsum slurry even when clay-containing gypsum is used, suppressing delay in setting time, and, when the gypsum slurry contains bubbles, increasing the bubble size in the hardened gypsum product. There is also provided a clay-containing gypsum slurry exhibiting excellent water-reducing ability even when clay-containing gypsum is used, having less delay in setting time, and, when containing bubbles, yielding a hardened gypsum product having a large bubble size.

### Embodiments of the Invention

The reasons why the dispersant for a clay-containing gypsum slurry of the present invention is capable of imparting excellent water-reducing ability to a gypsum slurry even when clay-containing gypsum is used, suppressing delay in setting time, and, when the gypsum slurry contains bubbles, increasing the bubble size in the hardened gypsum product, and why the clay-containing gypsum slurry of the present invention exhibits excellent water-reducing ability even when clay-containing gypsum is used, has less delay in setting time, and, when containing bubbles, yields a hardened gypsum product having a large bubble size, are not necessarily clear, but are presumed to be as follows. It is presumed that, when clay-containing gypsum is used for preparing a gypsum slurry, the gypsum and the clay, which differ in charge, form heteroaggregates, and these aggregates trap free water, resulting in decreased water-reducing ability. It is further presumed that, when a polycarboxylic-acid-based dispersant is used for preparing a clay-containing gypsum slurry, the alkyleneoxy chains introduced as steric repulsion groups into the polymer of the polycarboxylic-acid-based dispersant are adsorbed onto the clay, and therefore the dispersant cannot efficiently adsorb onto the gypsum, resulting in decreased water-reducing ability. In the present invention, a specific polycarboxylic-acid-based dispersant is used as component (A). The dispersant contains a specific constituent monomer (A2) having an alkyleneoxy group with an average number of added moles of 100 or more and 150 or less and a specific constituent monomer (A1) such as methacrylic acid and the like, and the proportion of constituent monomer (A1) to the total amount of constituent monomers (A1) and (A2) is less than 5 mass%. Component (A) is readily adsorbed onto clay, since it contains a large amount of constituent monomer (A2) which has a long alkyleneoxy chain and is readily adsorbed onto clay and since the proportion of constituent monomer (A1) which readily adsorbs onto gypsum is less than 5 mass%. It is presumed that, since component (A) efficiently adsorbs onto the clay, the remainder of component (A) that is not adsorbed onto the clay or any polycarboxylic-acid-based dispersant used together with component (A), preferably component (B), can efficiently act on the gypsum, so that excellent water-reducing ability can be imparted to the gypsum slurry. Further, when the dispersant of the present invention, which imparts excellent water-reducing ability, is used, the amount of dispersant required to obtain the same flowability can be reduced. It is therefore presumed that the amount of dispersant adsorbed onto the gypsum particles is reduced, and the amount of dispersant that inhibits the hydration reaction of the gypsum particles is also reduced, so that delay in setting can be suppressed. Further, the alkyleneoxy chains contained in the structure of a polycarboxylic-acid-based dispersant as steric repulsion units have a foam-stabilizing property. Therefore, when the gypsum slurry contains bubbles, the alkyleneoxy chains hinder bubble breakage and coalescence in the gypsum slurry, resulting in a small bubble size after hardening of the gypsum slurry. The dispersant of the present invention that contains component (A) and imparts excellent water-reducing ability can reduce the amount of dispersant used in the gypsum slurry. It is therefore presumed that stabilization of bubbles in the gypsum slurry is inhibited and bubble breakage and coalescence are promoted, so that the bubble size in the hardened gypsum product can be increased.

### [Dispersant for clay-containing gypsum slurry]

### <Component (A)>

The dispersant for a clay-containing gypsum slurry of the present invention contains, as component (A), a copolymer containing, as constituent monomers, constituent monomer (A1) represented by the following general formula (A1) and constituent monomer (A2) represented by the following general formula (A2),
wherein the proportion of constituent monomer (A1) to the total amount of constituent monomers (A1) and (A2) is less than 5 mass%; and
the copolymer has a weight-average molecular weight of 50,000 or more and 250,000 or less: 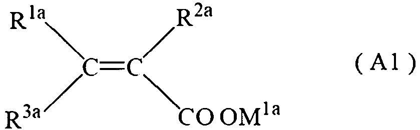 wherein:
   R^{1a}, R^{2a}, and R^{3a} are the same or different, and each represent a hydrogen atom, a methyl group, or (CH₂)ᵣCOOM^{2a}; and when (CH₂)ᵣCOOM^{2a} forms an anhydride with COOM^{1a} or another (CH₂)ᵣCOOM^{2a}, M^{1a} and M^{2a} are absent from those groups;
   M^{1a} and M^{2a} are the same or different, and each represent a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
   r is a number of 0 or more and 2 or less; 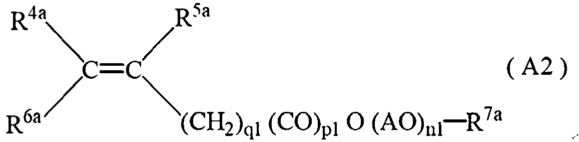 wherein:
      R^{4a} and R^{5a} are the same or different, and each represent a hydrogen atom or a methyl group;
      R^{6a} is a hydrogen atom, a methyl group, (CH₂)ᵣCOOM^{3a}, or (CH₂)_{q1}(CO)ₚ₁O(AO)ₙ₁R^{7a};
      R^{7a} is a hydrogen atom or an alkyl group having 1 or more and 4 or less carbons;
      AO is an alkyleneoxy group having 2 or more and 4 or less carbons;
      n1 is the average number of added moles of AO, the number being 100 or more and 150 or less;
      q1 is a number of 0 or more and 6 or less;
      p1 is 0 or 1;
      M^{3a} is a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
      r is a number of 0 or more and 2 or less.

In the general formula (A1), R^{1a} is, from the viewpoint of availability, preferably a hydrogen atom.

In the general formula (A1), R^{2a} is, from the viewpoints of availability and copolymerizability with constituent monomer (A2), preferably a hydrogen atom or a methyl group, more preferably a methyl group.

In the general formula (A1), R^{3a} is, from the viewpoint of availability, preferably a hydrogen atom.

(CH₂)ᵣCOOM^{2a} may form an anhydride with COOM^{1a} or another (CH₂)ᵣCOOM^{2a}, in which case M^{1a} and M^{2a} are absent from those groups. M1^{a} and M^{2a} are the same or different, and each represent a hydrogen atom, an alkali metal, an alkaline earth metal (1/2 atom), an ammonium group, an alkylammonium group, a substituted alkylammonium group, an alkyl group, a hydroxyalkyl group, or an alkenyl group.

The alkyl groups, hydroxyalkyl groups, and alkenyl groups of M^{1a} and M^{2a} each preferably have 1 or more and 4 or less carbons.

M^{1a} and M^{2a} are the same or different, and each preferably represent a hydrogen atom, an alkali metal, an alkaline earth metal (1/2 atom), an ammonium group, or an alkylammonium group, more preferably represent a hydrogen atom, an alkali metal, an alkaline earth metal (1/2 atom), or an ammonium group, further preferably represent a hydrogen atom, an alkali metal, or an alkaline earth metal (1/2 atom), and furthermore preferably represent a hydrogen atom or an alkali metal.

In the general formula (A1), r in (CH₂)ᵣCOOM^{2a} is preferably 0.

In the general formula (A2), R^{4a} is, from the viewpoint of availability, preferably a hydrogen atom.

In the general formula (A2), R^{5a} is, from the viewpoints of availability and copolymerizability with constituent monomer (A1), preferably a hydrogen atom or a methyl group, more preferably a methyl group.

In the general formula (A2), R^{6a} is, from the viewpoint of availability, preferably a hydrogen atom.

In the general formula (A2), R^{7a} is, from the viewpoints of ease of production and stability of product quality, preferably a hydrogen atom or a methyl group, more preferably a methyl group.

In the general formula (A2), AO is, from the viewpoints of availability and price, preferably a group selected from an ethyleneoxy group and a propyleneoxy group, more preferably an ethyleneoxy group. AO preferably includes an ethyleneoxy group.

In the general formula (A2), n1 is the average number of added moles of AO. From the viewpoint of dispersibility of a clay-containing gypsum slurry, n1 is 100 or more, preferably 110 or more, more preferably 115 or more, and 150 or less, preferably 140 or less, more preferably 130 or less. Further, when AO includes alkyleneoxy groups having different numbers of carbons in an average of n1 repeating units, these alkyleneoxy groups having different numbers of carbons may be arranged in a random form, a block form, or a combination thereof. Among all AO groups, the proportion of ethyleneoxy groups is preferably 70 mol% or more, more preferably 80 mol% or more, further preferably 90 mol% or more, and further preferably all AO groups are ethyleneoxy groups. For example, AO may include, in addition to an ethyleneoxy group, a propyleneoxy group, a butyleneoxy group, or the like.

In the general formula (A2), q1 is, from the viewpoint of availability, preferably 0, 1, or 2, more preferably 0 or 1, further preferably 0.

In the general formula (A2), preferred embodiments of M^{3a} in (CH₂)ᵣCOOM^{3a} are the same as those of M^{1a} and M^{2a}, and r is preferably 0.

Among all constituent monomers of component (A), the proportion of constituent monomer (A1) to the total amount of constituent monomers (A1) and (A2) is, from the viewpoints of adsorptivity to clay and low adsorptivity to gypsum, preferably 0.1 mass% or more, more preferably 0.5 mass% or more, further preferably 1 mass% or more, and less than 5 mass%, preferably 4 mass% or less, more preferably 3 mass% or less.

Among all constituent monomers of component (A), the proportion of constituent monomer (A1) to the total amount of constituent monomers (A1) and (A2) is, from the viewpoints of adsorptivity to clay and low adsorptivity to gypsum, preferably 35 mol% or more, more preferably 45 mol% or more, further preferably 55 mol% or more, and preferably 75 mol% or less, more preferably 70 mol% or less, further preferably 65 mol% or less.

Among all constituent monomers of component (A), the proportion of constituent monomer (A2) to the total amount of constituent monomers (A1) and (A2) is, from the viewpoint of adsorptivity to clay, preferably 95 mass% or more, more preferably 96 mass% or more, further preferably 97 mass% or more, and preferably 99.9 mass% or less, preferably 99.5 mass% or less, more preferably 99.0 mass% or less.

Among all constituent monomers of component (A), the proportion of constituent monomer (A2) to the total amount of constituent monomers (A1) and (A2) is, from the viewpoint of adsorptivity to clay, preferably 25 mol% or more, more preferably 30 mol% or more, further preferably 35 mol% or more, and preferably 65 mol% or less, more preferably 55 mol% or less, further preferably 45 mol% or less.

Among all constituent monomers of component (A), the total amount of constituent monomers (A1) and (A2) is, from the viewpoints of improving the water-reducing ability of a clay-containing gypsum slurry, suppressing delay in setting, and increasing the bubble size in the hardened gypsum product, preferably 70 mass% or more, more preferably 80 mass% or more, further preferably 90 mass% or more, and preferably 100 mass% or less. The total amount may be 100 mass%.

Among all constituent monomers of component (A), the total amount of constituent monomers (A1) and (A2) is, from the viewpoints of improving the water-reducing ability of a clay-containing gypsum slurry, suppressing delay in setting, and increasing the bubble size in the hardened gypsum product, preferably 70 mol% or more, more preferably 80 mol% or more, further preferably 90 mol% or more, and preferably 100 mol% or less. The total amount may be 100 mol%.

The copolymer of component (A) may contain constituent monomers other than constituent monomers (A1) and (A2) [hereinafter also referred to as constituent monomer (A3)]. Examples of constituent monomer (A3) include, for example, hydroxyethyl acrylate, hydroxyethyl methacrylate, 2-(methacryloyloxy)ethyl phosphate (HEMA-P), 2-hydroxyethyl acrylate (HEA), methyl acrylate, methyl methacrylate, 2-hydroxyethyl methacrylate (HEMA), allylsulfonic acid, methallylsulfonic acid, and salts thereof, such as alkali metal salts, alkaline earth metal salts, ammonium salts, and amine salts. Further examples include constituent units derived from one or more monomers selected from (meth)acrylamide, N-methyl(meth)acrylamide, N,N-dimethyl(meth)acrylamide, 2-

(meth)acrylamido-2-methanesulfonic acid, 2-(meth)acrylamido-2-ethanesulfonic acid, 2-(meth)acrylamido-2-propanesulfonic acid, styrene, styrenesulfonic acid, and the like. Herein, "(meth)acryl" means acryl or methacryl.

The copolymer of component (A) may contain constituent monomers having a phosphoric acid monoester or phosphoric acid diester; however, from the viewpoint of suppressing gelation due to an increase in molecular weight, the amount thereof is limited.

Examples of constituent monomers having a phosphoric acid monoester include phosphoric acid monoesters of organic hydroxy compounds. Specific examples include phosphoric acid esters of polyalkylene glycol mono(meth)acrylates, and the like. Further examples include compounds selected from phosphoric acid monoesters of (2-hydroxyethyl) methacrylate and phosphoric acid monoesters of (2-hydroxyethyl) acrylate.

Examples of constituent monomers having a phosphoric acid diester include phosphoric acid diesters of organic hydroxy compounds. Specific examples include phosphoric acid diesters of polyalkylene glycol di(meth)acrylates, and the like. Further examples include compounds selected from phosphoric acid diesters of (2-hydroxyethyl) methacrylate and phosphoric acid diesters of (2-hydroxyethyl) acrylate.

When component (A) contains, among all constituent monomers thereof, a constituent monomer having a phosphoric acid monoester or phosphoric acid diester, the proportion thereof is, from the viewpoint of suppressing gelation due to an increase in molecular weight, preferably 10 mol% or less, more preferably 1 mol% or less, further preferably 0.1 mol% or less.

When component (A) contains, among all constituent monomers thereof, a constituent monomer having a phosphoric acid monoester or phosphoric acid diester, the proportion thereof is, from the viewpoint of suppressing gelation due to an increase in molecular weight, preferably 10 mass% or less, more preferably 1 mass% or less, further preferably 0.1 mass% or less.

The copolymer of component (A) need not contain a constituent monomer having a phosphoric acid monoester or phosphoric acid diester.

The weight-average molecular weight (Mw) of component (A) is, from the viewpoints of improving the water-reducing ability of a clay-containing gypsum slurry, suppressing delay in setting, and increasing the bubble size in the hardened gypsum product, 50,000 or more, preferably 80,000 or more, more preferably 100,000 or more, further preferably 120,000 or more, and 250,000 or less, preferably 230,000 or less, more preferably 200,000 or less, further preferably 180,000 or less.

The ratio of weight-average molecular weight (Mw) to number-average molecular weight (Mn) of component (A), Mw/Mn, is, from the viewpoints of improving the water-reducing ability of a clay-containing gypsum slurry, suppressing delay in setting, and increasing the bubble size in the hardened gypsum product, preferably 1.0 or more, more preferably 1.3 or more, further preferably 1.5 or more, and preferably 3.0 or less, more preferably 2.8 or less, further preferably 2.5 or less.

The weight-average molecular weight (Mw) and number-average molecular weight (Mn) of component (A) were measured by gel permeation chromatography (GPC) under the following conditions.

### *GPC conditions

Instrument: GPC (HLC-8320GPC), manufactured by Tosoh Corporation
Columns: G4000PWXL + G2500PWXL (manufactured by Tosoh Corporation)
Eluent: 0.2 M phosphate buffer/CH₃CN = 9/1
Flow rate: 1.0 mL/min
Column temperature: 40°C
Detection: RI
Sample concentration: 0.2 mg/mL
Standards: polyethylene glycol standards (monodisperse polyethylene glycols having known molecular weights: 250,000, 145,000, 87,500, 46,000, and 24,000)

The content of component (A) in the dispersant for a clay-containing gypsum slurry of the present invention is, from the viewpoints of improving the water-reducing ability of a clay-containing gypsum slurry, suppressing delay in setting, and increasing the bubble size in the hardened gypsum product, preferably 20 mass% or more, more preferably 25 mass% or more, further preferably 30 mass% or more, and preferably 60 mass% or less, more preferably 50 mass% or less, further preferably 40 mass% or less.

### <Component (B)>

From the viewpoints of improving the water-reducing ability of a clay-containing gypsum slurry, suppressing delay in setting, and increasing the bubble size in the hardened gypsum product, the dispersant for a clay-containing gypsum slurry of the present invention preferably contains, as component (B), a copolymer containing, as constituent monomers, constituent monomer (B1) represented by the following general formula (B1) and constituent monomer (B2) represented by the following general formula (B2),

wherein the proportion of constituent monomer (B1) to the total amount of constituent monomers (B1) and (B2) is 5 mass% or more and less than 13 mass%: 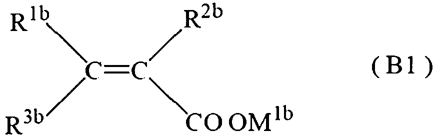 wherein:
R^{1b}, R^{2b}, and R^{3b} are the same or different, and each represent a hydrogen atom, a methyl group, or (CH₂)ᵣCOOM^{2b}; and when (CH₂)ᵣCOOM^{2d} forms an anhydride with COOM^{1b} or another (CH₂)ᵣCOOM^{2b}, M^{1b} and M^{2b} are absent from those groups;
M^{1b} and M^{2b} are the same or different, and each represent a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
r is a number of 0 or more and 2 or less; 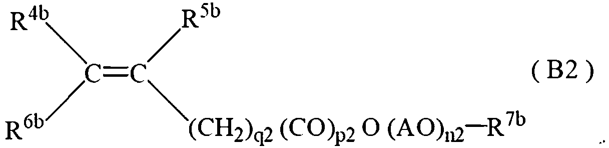 wherein:
   R^{4b} and R^{5b} are the same or different, and each represent a hydrogen atom or a methyl group;
   R^{6b} is a hydrogen atom, a methyl group, (CH₂)ᵣCOOM^{3b}, or (CH₂)_{q2}(CO) ₚ₂O(AO)ₙ₂R^{7b};
   R^{7b} is a hydrogen atom or an alkyl group having 1 or more and 4 or less carbons,
   AO is an alkyleneoxy group having 2 or more and 4 or less carbons;
   n2 is the average number of added moles of AO, the number being 5 or more and 300 or less,
   q2 is a number of 0 or more and 6 or less;
   p2 is 0 or 1;
   M^{3b} is a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
   r is a number of 0 or more and 2 or less.

In the general formula (B1), R^{1b} is, from the viewpoint of availability, preferably a hydrogen atom.

In the general formula (B1), R^{2b} is, from the viewpoints of availability and copolymerizability with constituent monomer (B2), preferably a hydrogen atom or a methyl group, more preferably a methyl group.

In the general formula (B1), R^{3b} is, from the viewpoint of availability, preferably a hydrogen atom.

(CH₂)ᵣCOOM^{2b} may form an anhydride with COOM^{1b} or another (CH₂)ᵣCOOM^{2b}, in which case M^{1b} and M^{2b} are absent from those groups. M1^{b} and M^{2b} are the same or different, and each represent a hydrogen atom, an alkali metal, an alkaline earth metal (1/2 atom), an ammonium group, an alkylammonium group, a substituted alkylammonium group, an alkyl group, a hydroxyalkyl group, or an alkenyl group.

The alkyl groups, hydroxyalkyl groups, and alkenyl groups of M^{1b} and M^{2b} each preferably have 1 or more and 4 or less carbons.

M^{1b} and M^{2b} are the same or different, and each preferably represent a hydrogen atom, an alkali metal, an alkaline earth metal (1/2 atom), an ammonium group, or an alkylammonium group, more preferably represent a hydrogen atom, an alkali metal, an alkaline earth metal (1/2 atom), or an ammonium group, further preferably represent a hydrogen atom, an alkali metal, or an alkaline earth metal (1/2 atom), and furthermore preferably represent a hydrogen atom or an alkali metal.

In the general formula (B1), r in (CH₂)ᵣCOOM^{2b} is preferably 0.

In the general formula (B2), R^{4b} is, from the viewpoint of availability, preferably a hydrogen atom.

In the general formula (B2), R^{5b} is, from the viewpoints of availability and copolymerizability with constituent monomer (B1), preferably a hydrogen atom or a methyl group, more preferably a methyl group.

In the general formula (B2), R^{6b} is, from the viewpoint of availability, preferably a hydrogen atom.

In the general formula (B2), R^{7b} is, from the viewpoints of ease of production and stability of product quality, preferably a hydrogen atom or a methyl group, more preferably a methyl group.

In the general formula (B2), AO is, from the viewpoints of availability and price, preferably a group selected from an ethyleneoxy group and a propyleneoxy group, more preferably an ethyleneoxy group. AO preferably includes an ethyleneoxy group.

In the general formula (B2), n2 is the average number of added moles of AO. From the viewpoints of improving the water-reducing ability of a clay-containing gypsum slurry, suppressing delay in setting, and increasing the bubble size in the hardened gypsum product, n2 is 5 or more, preferably 50 or more, more preferably 90 or more, further preferably 100 or more, furthermore preferably 110 or more, and 300 or less, preferably 150 or less, more preferably 130 or less. Further, when AO includes alkyleneoxy groups having different numbers of carbons in an average of n2 repeating units, these alkyleneoxy groups having different numbers of carbons may be arranged in a random form, a block form, or a combination thereof. Among all AO groups, the proportion of ethyleneoxy groups is preferably 70 mol% or more, more preferably 80 mol% or more, further preferably 90 mol% or more, and further preferably all AO groups are ethyleneoxy groups. For example, AO may include, in addition to an ethyleneoxy group, a propyleneoxy group, a butyleneoxy group, or the like.

In the general formula (B2), q2 is, from the viewpoint of availability, preferably 0, 1, or 2, more preferably 0 or 1, further preferably 0.

In the general formula (B2), preferred embodiments of M^{3b} in (CH₂)ᵣCOOM^{3b} are the same as those of M^{1b} and M^{2b}, and r is preferably 0.

Among all constituent monomers of component (B), the proportion of constituent monomer (B1) to the total amount of constituent monomers (B1) and (B2) is, from the viewpoints of improving the water-reducing ability of a clay-containing gypsum slurry, suppressing delay in setting, and increasing the bubble size in the hardened gypsum product, 5 mass% or more, preferably 6 mass% or more, and less than 13 mass%, preferably 12.5 mass% or less.

Among all constituent monomers of component (B), the proportion of constituent monomer (B1) to the total amount of constituent monomers (B1) and (B2) is, from the viewpoints of improving the water-reducing ability of a clay-containing gypsum slurry, suppressing delay in setting, and increasing the bubble size in the hardened gypsum product, preferably 70 mol% or more, more preferably 75 mol% or more, further preferably 80 mol% or more, and preferably 95 mol% or less, more preferably 92 mol% or less, further preferably 90 mol% or less.

Among all constituent monomers of component (B), the proportion of constituent monomer (B2) to the total amount of constituent monomers (B1) and (B2) is, from the viewpoints of improving the water-reducing ability of a clay-containing gypsum slurry, suppressing delay in setting, and increasing the bubble size in the hardened gypsum product, preferably 87 mass% or more, more preferably 87.5 mass% or more, and preferably 95 mass% or less, preferably 94 mass% or less.

Among all constituent monomers of component (B), the proportion of constituent monomer (B2) to the total amount of constituent monomers (B1) and (B2) is, from the viewpoints of improving the water-reducing ability of a clay-containing gypsum slurry, suppressing delay in setting, and increasing the bubble size in the hardened gypsum product, preferably 5 mol% or more, more preferably 8 mol% or more, further preferably 10 mol% or more, and preferably 30 mol% or less, more preferably 25 mol% or less, further preferably 20 mol% or less.

Among all constituent monomers of component (B), the total amount of constituent monomers (B1) and (B2) is, from the viewpoints of improving the water-reducing ability of a clay-containing gypsum slurry, suppressing delay in setting, and increasing the bubble size in the hardened gypsum product, preferably 70 mass% or more, more preferably 80 mass% or more, further preferably 90 mass% or more, and preferably 100 mass% or less. The total amount may be 100 mass%.

Among all constituent monomers of component (B), the total amount of constituent monomers (B1) and (B2) is, from the viewpoints of improving the water-reducing ability of a clay-containing gypsum slurry, suppressing delay in setting, and increasing the bubble size in the hardened gypsum product, preferably 70 mol% or more, more preferably 80 mol% or more, further preferably 90 mol% or more, and preferably 100 mol% or less. The total amount may be 100 mol%.

The copolymer of component (B) may contain constituent monomers other than constituent monomers (B1) and (B2) [hereinafter also referred to as constituent monomer (B3)]. Examples of constituent monomer (B3) include, for example, hydroxyethyl acrylate, hydroxyethyl methacrylate, 2-(methacryloyloxy)ethyl phosphate (HEMA-P), 2-hydroxyethyl acrylate (HEA), methyl acrylate, methyl methacrylate, 2-hydroxyethyl methacrylate (HEMA), allylsulfonic acid, methallylsulfonic acid, and salts thereof, such as alkali metal salts, alkaline earth metal salts, ammonium salts, and amine salts. Further examples include constituent units derived from one or more monomers selected from (meth)acrylamide, N-methyl(meth)acrylamide, N,N-dimethyl(meth)acrylamide, 2-(meth)acrylamido-2-methanesulfonic acid, 2-(meth)acrylamido-2-ethanesulfonic acid, 2-(meth)acrylamido-2-propanesulfonic acid, styrene, styrenesulfonic acid, and the like. Herein, "(meth)acryl" means acryl or methacryl.

The weight-average molecular weight (Mw) of component (B) is, from the viewpoints of improving the water-reducing ability of a clay-containing gypsum slurry, suppressing delay in setting, and increasing the bubble size in the hardened gypsum product, preferably 45,000 or more, more preferably 50,000 or more, further preferably 55,000 or more, and preferably 80,000 or less, more preferably 75,000 or less, further preferably 70,000 or less.

The ratio of weight-average molecular weight (Mw) to number-average molecular weight (Mn) of component (B), Mw/Mn, is, from the viewpoints of improving the water-reducing ability of a clay-containing gypsum slurry, suppressing delay in setting, and increasing the bubble size in the hardened gypsum product, preferably 1.45 or more, more preferably 1.50 or more, further preferably 1.52 or more, and preferably 1.66 or less, more preferably 1.64 or less, further preferably 1.62 or less.

The weight-average molecular weight (Mw) and number-average molecular weight (Mn) of component (B) were measured by gel permeation chromatography (GPC) under the same conditions as those described for component (A).

When the dispersant for a clay-containing gypsum slurry of the present invention contains component (B), the content of component (B) is, from the viewpoints of improving the water-reducing ability of a clay-containing gypsum slurry, suppressing delay in setting, and increasing the bubble size in the hardened gypsum product, preferably 20 mass% or more, more preferably 30 mass% or more, further preferably 40 mass% or more, and preferably 90 mass% or less, more preferably 80 mass% or less, further preferably 60 mass% or less.

When the dispersant for a clay-containing gypsum slurry of the present invention contains component (B), the mass ratio of the content of component (A) to the total content of components (A) and (B), (A)/((A)+(B)), is, from the viewpoints of improving the water-reducing ability of a clay-containing gypsum slurry, suppressing delay in setting, and increasing the bubble size in the hardened gypsum product, preferably 0.2 or more, more preferably 0.3 or more, further preferably 0.4 or more, and preferably 1.0 or less, more preferably 0.8 or less, further preferably 0.6 or less.

The dispersant for a clay-containing gypsum slurry of the present invention may contain water. When the dispersant for a clay-containing gypsum slurry of the present invention contains water, the content of water is preferably 40 mass% or more, preferably 45 mass% or more, more preferably 50 mass% or more, and preferably 75 mass% or less, more preferably 70 mass% or less, further preferably 65 mass% or less.

The dispersant for a clay-containing gypsum slurry of the present invention may contain nitrogen-containing compounds; however, from the viewpoint of improving dispersibility, the content thereof is limited.

Examples of nitrogen-containing compounds include one or more selected from ammonia, alkylamines, alkanolamines, alkylalkanolamines, ethylenediamine, diethylenetriamine, triethylenetetramine, tetraethylenepentamine, and polyethyleneimine (those having an average condensation degree of ethyleneimine groups of 4 or more, further preferably 5 or more).

When the dispersant for a clay-containing gypsum slurry of the present invention contains a nitrogen-containing compound, the content thereof is, from the viewpoint of improving dispersibility, preferably 1 mass% or less, more preferably 0.1 mass% or less, further preferably 0.01 mass% or less. The dispersant for a clay-containing gypsum slurry of the present invention need not contain a nitrogen-containing compound.

The dispersant for a clay-containing gypsum slurry of the present invention may optionally contain a thickener, a chelating agent, a heavy-metal scavenger, a rust inhibitor, a preservative, a colorant, a fragrance, a defoamer, a solvent, a flocculant, a water-soluble polymer, and the like, provided that substances not falling under components (A) and (B) are used as these optional components.

The dispersant for a clay-containing gypsum slurry of the present invention may suitably be used as a dispersant for a gypsum slurry containing clay-containing gypsum.

In particular, the dispersant for a clay-containing gypsum slurry of the present invention may suitably be used as a dispersant for a gypsum slurry containing clay-containing gypsum, the gypsum having a clay content of 0.5 mass% or more and 6.0 mass% or less, as determined in accordance with the methylene blue adsorption test (JCAS I-61-2008).

As the clay-containing gypsum, those described below for the clay-containing gypsum slurry of the present invention may be applied as appropriate.

### [Method for producing dispersant for clay-containing gypsum slurry]

The present invention relates to a method for producing a dispersant for a clay-containing gypsum slurry, the method including mixing component (A).

The method for producing a dispersant for a clay-containing gypsum slurry of the present invention may further include mixing component (B).

The method for producing a dispersant for a clay-containing gypsum slurry of the present invention may further include mixing water.

Components (A) and (B) are the same as those described for the dispersant for a clay-containing gypsum slurry of the present invention.

The embodiments described for the dispersant for a clay-containing gypsum slurry of the present invention may be applied, as appropriate, to the method for producing a dispersant for a clay-containing gypsum slurry of the present invention.

In the method for producing a dispersant for a clay-containing gypsum slurry of the present invention, the mixing amount of component (A), the mixing amount of component (B), the mixing amount of water, and the mass ratio of the mixing amount of component (A) to the total mixing amount of components (A) and (B), (A)/((A)+(B)), may be determined, as appropriate, by applying the contents of the respective components and the mass ratio described for the dispersant for a clay-containing gypsum slurry of the present invention, with the contents of the respective components being replaced by the mixing amounts.

### [Use of dispersant in clay-containing gypsum slurry]

The dispersant for a clay-containing gypsum slurry of the present invention may suitably be used as a dispersant for a gypsum slurry containing clay-containing gypsum.

That is, the present invention relates to use, in a clay-containing gypsum slurry, of a dispersant containing component (A).

The dispersant may further contain component (B).

The dispersant may further contain water.

Components (A) and (B) are the same as those described for the dispersant for a clay-containing gypsum slurry of the present invention.

The dispersant is the same as the dispersant for a clay-containing gypsum slurry of the present invention, and the embodiments described for the dispersant for a clay-containing gypsum slurry of the present invention and for the method for producing a dispersant for a clay-containing gypsum slurry of the present invention may be applied, as appropriate, to the dispersant.

The dispersant is suitable for use in a gypsum slurry containing clay-containing gypsum, the gypsum having a clay content of 0.5 mass% or more and 6.0 mass% or less, as determined in accordance with the methylene blue adsorption test (JCAS I-61-2008).

As the clay-containing gypsum, those described below for the clay-containing gypsum slurry of the present invention may be applied as appropriate.

### [Clay-containing gypsum slurry]

The present invention provides a clay-containing gypsum slurry containing component (A), clay-containing gypsum, and water.

From the viewpoints of improving the water-reducing ability, suppressing delay in setting, and increasing the bubble size in the hardened gypsum product, the clay-containing gypsum slurry of the present invention preferably further contains component (B).

The embodiments described for the dispersant for a clay-containing gypsum slurry of the present invention and for the method for producing a dispersant for a clay-containing gypsum slurry of the present invention may be applied, as appropriate, to the clay-containing gypsum slurry of the present invention.

Components (A) and (B) are the same as those described for the dispersant for a clay-containing gypsum slurry of the present invention.

The clay-containing gypsum slurry of the present invention is suitable for gypsum boards.

Gypsum includes anhydrite, hemihydrate gypsum, dihydrate gypsum, and the like.

As the gypsum, any type of gypsum may be used, such as high-quality neutralized gypsum, phosphogypsum (a byproduct from phosphoric acid production), flue gas desulfurization gypsum generated in thermal power plants, natural gypsum containing various impurities and clay, mixtures thereof, and the like.

Natural gypsum may be used, since the clay-containing gypsum slurry of the present invention has excellent water-reducing ability even when clay-containing gypsum is used.

The clay contained in the gypsum is mainly composed of hydrous silicate minerals having a layered structure (hereinafter referred to as clay minerals). Examples of clay minerals contained as fine minerals in the clay include kaolin minerals (kaolinite, dickite, and nacrite), serpentine (lizardite, antigorite, and chrysotile), mica clay minerals (illite, sericite, glauconite, and celadonite), chlorite, vermiculite, and smectite (montmorillonite, beidellite, nontronite, saponite, and hectorite).

The clay content of the clay-containing gypsum, as determined in accordance with the methylene blue adsorption test (Japan Cement Association Standard Test Method JCAS I-61-2008), is, from the viewpoint of allowing component (A) to efficiently act on the clay, preferably 0.5 mass% or more, more preferably 1.0 mass% or more, further preferably 2.0 mass% or more, further preferably 3.0 mass% or more, further preferably 4.0 mass% or more, and preferably 6.0 mass% or less, more preferably 5.0 mass% or less.

The methylene blue adsorption test is generally known as a method for measuring the active clay content in sand. The measurement principle is that the amount of methylene blue adsorbed on sand is determined by titration, and the result is evaluated on the basis of the degree of halo formation of a spot on filter paper.

In the clay-containing gypsum slurry of the present invention, the water/gypsum ratio is, from the viewpoint of workability, preferably 40 mass% or more, more preferably 45 mass% or more, further preferably 50 mass% or more, and, from the viewpoint of reducing fuel costs, preferably 80 mass% or less, more preferably 75 mass% or less, further preferably 70 mass% or less.

As used herein, the water/gypsum ratio refers to the mass percentage (mass%) represented by the content of water relative to the content of gypsum in the clay-containing gypsum slurry, and is calculated as water/gypsum × 100. In the present invention, the amount of clay contained in the gypsum is also included in the amount of the gypsum. The same applies to other quantitative relationships relating to gypsum in the clay-containing gypsum slurry.

In the clay-containing gypsum slurry of the present invention, the content of component (A), per 100 parts by mass of gypsum, is, from the viewpoints of improving the water-reducing ability, suppressing delay in setting, and increasing the bubble size in the hardened gypsum product, preferably 0.01 parts by mass or more, more preferably 0.04 parts by mass or more, further preferably 0.06 parts by mass or more, furthermore preferably 0.08 parts by mass or more, and preferably 0.5 parts by mass or less, more preferably 0.4 parts by mass or less, further preferably 0.3 parts by mass or less.

When the clay-containing gypsum slurry of the present invention contains component (B), the content of component (B), per 100 parts by mass of gypsum, is, from the viewpoints of improving the water-reducing ability, suppressing delay in setting, and increasing the bubble size in the hardened gypsum product, preferably 0.01 parts by mass or more, more preferably 0.04 parts by mass or more, further preferably 0.06 parts by mass or more, furthermore preferably 0.08 parts by mass or more, and preferably 0.5 parts by mass or less, more preferably 0.4 parts by mass or less, further preferably 0.3 parts by mass or less.

When the clay-containing gypsum slurry of the present invention contains component (B), the mass ratio of the content of component (A) to the total content of components (A) and (B), (A)/((A)+(B)), is, from the viewpoints of improving the water-reducing ability, suppressing delay in setting, and increasing the bubble size in the hardened gypsum product, preferably 0.2 or more, more preferably 0.3 or more, further preferably 0.4 or more, and preferably 1.0 or less, more preferably 0.8 or less, further preferably 0.6 or less.

From the viewpoint of reducing the specific gravity of the hardened clay-containing gypsum product, the clay-containing gypsum slurry of the present invention preferably contains, as component (C), a foaming agent.

Examples of foaming agents as component (C) include sulfonic acid compounds, ether sulfate compounds, carboxylic acid compounds, phosphonic acid compounds, phosphoric acid compounds, and the like, each having a hydrocarbon group having 8 or more and 18 or less carbons. Examples include one or more selected from alkyl or alkenyl sulfates having an alkyl group or alkenyl group, alkyl or alkenyl sulfonic acids having an alkyl group or alkenyl group, polyoxyalkylene alkyl or alkenyl ether sulfates having an alkyl group or alkenyl group, polyoxyalkylene alkyl or alkenyl ether carboxylic acids having an alkyl group or alkenyl group, and salts thereof.

Examples of salts of these compounds include one or more selected from alkali metal salts such as sodium salts, potassium salts, and the like, ammonium salts, and organic ammonium salts.

From the viewpoint of foam properties, particularly foamability, in an aqueous system, component (C) is preferably one or more selected from alkyl or alkenyl sulfates having an alkyl group or alkenyl group having 8 or more and 18 or less carbons, alkyl or alkenyl sulfonic acids having an alkyl group or alkenyl group having 8 or more and 18 or less carbons, polyoxyalkylene alkyl or alkenyl ether sulfates having an alkyl group or alkenyl group having 8 or more and 18 or less carbons, and salts thereof.

Examples of salts of these compounds include one or more selected from alkali metal salts such as sodium salts, potassium salts, and the like, ammonium salts, and organic ammonium salts.

From the viewpoint of foam properties, particularly foamability, in an aqueous system, component (C) is preferably one or more selected from (C1) alkyl or alkenyl sulfates having an alkyl group or alkenyl group having 8 or more and 18 or less carbons, or salts thereof (hereinafter referred to as component (C1)), and (C2) polyoxyalkylene alkyl or alkenyl ether sulfates having an alkyl group or alkenyl group having 8 or more and 18 or less carbons, or salts thereof (hereinafter referred to as component (C2)).

From the viewpoint of increasing the bubble size in the hardened gypsum product, component (C1) has an alkyl group or alkenyl group, preferably an alkyl group, having preferably 8 or more carbons, more preferably 10 or more carbons, and preferably 18 or less carbons, more preferably 16 or less carbons, further preferably 14 or less carbons, furthermore preferably 12 or less carbons.

Examples of salts of component (C1) include one or more selected from alkali metal salts such as sodium salts, potassium salts, and the like, ammonium salts, and organic ammonium salts.

Specific examples of component (C1) include one or more selected from octyl sulfate, decyl sulfate, dodecyl sulfate, tetradecyl sulfate, hexadecyl sulfate, octadecyl sulfate, 2-ethylhexyl sulfate, 2-propylheptyl sulfate, and salts thereof. From the viewpoint of increasing the bubble size in the hardened gypsum product, component (C1) preferably includes one or more compounds selected from decyl sulfate, dodecyl sulfate, tetradecyl sulfate, and salts thereof, more preferably one or more compounds selected from decyl sulfate, dodecyl sulfate, and salts thereof.

From the viewpoint of foam properties, particularly foamability, in an aqueous system, component (C) may contain, as component (C1), two alkyl or alkenyl sulfates, or salts thereof, whose alkyl groups or alkenyl groups have different numbers of carbons.

From the viewpoint of increasing the bubble size in the hardened gypsum product, component (C2) has an alkyl group or alkenyl group, preferably an alkyl group, having preferably 8 or more carbons, more preferably 10 or more carbons, and preferably 16 or less carbons, more preferably 14 or less carbons, further preferably 12 or less carbons.

The oxyalkylene group of component (C2) is an oxyethylene group or an oxypropylene group, preferably an oxyethylene group, and the average number of added moles of the oxyalkylene group is, from the viewpoint of foam properties, particularly foamability, in an aqueous system, preferably 1 or more, more preferably 2 or more, and, from the viewpoint of foam properties, particularly foamability, in an aqueous system, preferably 10 or less, more preferably 6 or less, further preferably 4 or less.

Examples of salts of component (C2) include one or more selected from alkali metal salts such as sodium salts, potassium salts, and the like, ammonium salts, and organic ammonium salts.

Specific examples of component (C2) include one or more selected from polyoxyethylene octyl ether sulfate, polyoxyethylene decyl ether sulfate, polyoxyethylene lauryl ether sulfate, polyoxyethylene tridecyl ether sulfate, polyoxyethylene myristyl ether sulfate, polyoxyethylene cetyl ether sulfate, polyoxyethylene stearyl ether sulfate, polyoxypropylene octyl ether sulfate, polyoxypropylene decyl ether sulfate, polyoxypropylene lauryl ether sulfate, polyoxypropylene tridecyl ether sulfate, polyoxypropylene myristyl ether sulfate, polyoxypropylene cetyl ether sulfate, polyoxypropylene stearyl ether sulfate, polyoxyethylene polyoxypropylene octyl ether sulfate, polyoxyethylene polyoxypropylene decyl ether sulfate, polyoxyethylene polyoxypropylene lauryl ether sulfate, polyoxyethylene polyoxypropylene tridecyl ether sulfate, polyoxyethylene polyoxypropylene myristyl ether sulfate, polyoxyethylene polyoxypropylene cetyl ether sulfate, polyoxyethylene polyoxypropylene stearyl ether sulfate, and salts thereof. From the viewpoint of increasing the bubble size in the gypsum slurry, component (C2) is preferably one or more selected from polyoxyethylene decyl ether sulfate, polyoxyethylene lauryl ether sulfate, polyoxyethylene myristyl ether sulfate, polyoxypropylene decyl ether sulfate, polyoxypropylene lauryl ether sulfate, polyoxypropylene myristyl ether sulfate, polyoxyethylene polyoxypropylene decyl ether sulfate, polyoxyethylene polyoxypropylene lauryl ether sulfate, polyoxyethylene polyoxypropylene myristyl ether sulfate, and salts thereof.

When the clay-containing gypsum slurry of the present invention contains component (C), the content of component (C), per 100 parts by mass of water, is, from the viewpoint of reducing the specific gravity of the hardened clay-containing gypsum product, preferably 0.1 parts by mass or more, more preferably 0.2 parts by mass or more, further preferably 0.3 parts by mass or more, and preferably 1.0 parts by mass or less, more preferably 0.9 parts by mass or less, further preferably 0.8 parts by mass or less.

The clay-containing gypsum slurry of the present invention may contain the above-described nitrogen-containing compounds; however, from the viewpoint of improving dispersibility, the content thereof is limited.

When the clay-containing gypsum slurry of the present invention contains a nitrogen-containing compound, the content thereof, per 100 parts by mass of gypsum, is, from the viewpoint of improving dispersibility, preferably 0.1 parts by mass or less, more preferably 0.01 parts by mass or less, further preferably 0.001 parts by mass or less. The clay-containing gypsum slurry of the present invention need not contain a nitrogen-containing compound.

The clay-containing gypsum slurry of the present invention may contain an additive used for gypsum boards and the like. Such additives include a defoamer, a foam stabilizer, a setting control agent, a water repellent, an adhesive, a retarder, and the like (excluding those falling under components (A), (B), and (C)). In addition, gypsum boards may be produced by adding reinforcing fibers such as glass fibers, carbon fibers, waste paper, virgin pulp, and the like, or by using lightweight aggregates such as perlite, expanded polystyrene, and the like.

By drying and curing the clay-containing gypsum slurry of the present invention, a hardened gypsum product is obtained.

The specific gravity of the hardened product of the clay-containing gypsum slurry of the present invention is, from the viewpoint of strength, preferably 0.3 or more, more preferably 0.4 or more, further preferably 0.5 or more, and, from the viewpoint of handleability, preferably 0.9 or less, more preferably 0.8 or less, further preferably 0.7 or less.

The clay-containing gypsum slurry of the present invention preferably contains bubbles. When the slurry contains bubbles, the average bubble diameter in the hardened product of the clay-containing gypsum slurry of the present invention is, from the viewpoint of improving the strength of the hardened product, preferably 230 µm or more, more preferably 250 µm or more, further preferably 300 µm or more, and, from the viewpoint of cross-sectional appearance, preferably 800 µm or less, more preferably 700 µm or less, further preferably 600 µm or less, furthermore preferably 500 µm or less, furthermore preferably 400 µm or less.

A hardened product is prepared from the clay-containing gypsum slurry, and the hardened product is arbitrarily cut to prepare a cross section thereof. The cross section is observed under a digital microscope, and the diameters of 200 to 400 arbitrarily selected bubble cross sections are measured. The average bubble diameter is calculated from the average value (arithmetic mean) of those diameters. Note that, in measuring the diameter of a bubble cross section, when the bubble cross section is circular, the diameter thereof is used; when the bubble cross section is oval, the major axis thereof is used; and when the bubble cross section is irregular in shape, the longest portion thereof is used as the diameter.

A clay-containing gypsum slurry containing bubbles can yield a lightweight hardened product having a low specific gravity. However, when the volume (proportion) of the bubbles is increased in order to further reduce the weight of the hardened product of the clay-containing gypsum slurry, the proportion of the clay-containing gypsum slurry decreases, and, as a result, the strength of the hardened product tends to decrease. On the other hand, as described in paragraph 0004 of JP-A H10-330174, among bubble-containing clay-containing gypsum slurries having the same specific gravity, a clay-containing gypsum slurry having a larger bubble size can yield a hardened product having higher strength. Further, when the bubble size in a bubble-containing clay-containing gypsum slurry is increased, drying in obtaining a hardened product of the gypsum slurry is accelerated, resulting in advantages such as reducing fuel costs for drying, reducing CO₂ emissions, and the like. In addition, when the bubble size in a bubble-containing clay-containing gypsum slurry is increased, the distance between bubbles is increased, and interconnection between bubbles is less likely to occur, so that thermal insulation and sound insulation can be improved.

### [Method for producing clay-containing gypsum slurry]

The present invention relates to a method for producing a clay-containing gypsum slurry, the method including mixing component (A), clay-containing gypsum, and water.

The method for producing a clay-containing gypsum slurry of the present invention may further include mixing component (B).

The method for producing a clay-containing gypsum slurry of the present invention may further include mixing component (C).

Components (A) and (B) are the same as those described for the dispersant for a clay-containing gypsum slurry of the present invention.

The clay-containing gypsum and component (C) are the same as those described for the clay-containing gypsum slurry of the present invention.

In the method for producing a clay-containing gypsum slurry of the present invention, the mixing amounts of the respective components and the mass ratios thereof may be determined, as appropriate, by applying the contents of the respective components and the mass ratios thereof described for the clay-containing gypsum slurry of the present invention, with the contents of the respective components being replaced by the mixing amounts.

The clay-containing gypsum slurry of the present invention can be produced using the dispersant for a clay-containing gypsum slurry of the present invention.

That is, the present invention provides a method for producing a clay-containing gypsum slurry, including the following step 1 and step 2:
<step 1>
   a step of foaming a liquid composition containing (C) a foaming agent (hereinafter referred to as component (C)) and water to obtain a foam; and
<step 2>
   a step of mixing clay-containing gypsum, water, the foam obtained in step 1, and the dispersant for a clay-containing gypsum slurry of the present invention, the dispersant containing component (A).

Note that step 2 may be carried out by preparing a clay-containing gypsum slurry containing clay-containing gypsum, water, and the dispersant for a clay-containing gypsum slurry of the present invention, and mixing the clay-containing gypsum slurry with the foam obtained in step 1.

According to this production method, the bubble-containing clay-containing gypsum slurry of the present invention can be prepared.

The embodiments described for the dispersant for a clay-containing gypsum slurry of the present invention, for the method for producing a dispersant for a clay-containing gypsum slurry of the present invention, and for the clay-containing gypsum slurry of the present invention may be applied, as appropriate, to the method for producing a clay-containing gypsum slurry of the present invention.

Component (C) is the same as that described for the clay-containing gypsum slurry of the present invention. In step 1, the content of component (C) in the liquid composition is preferably 0.1 mass% or more, more preferably 0.2 mass% or more, and preferably 1.0 mass% or less, more preferably 0.9 mass% or less, and the balance may be water.

In the method for producing a clay-containing gypsum slurry of the present invention, the mixing amounts of the respective components and the mass ratios thereof may be determined, as appropriate, by applying the contents of the respective components and the mass ratios thereof described for the clay-containing gypsum slurry of the present invention, with the contents of the respective components being replaced by the mixing amounts.

The temperatures of the foam used for mixing and the clay-containing gypsum slurry are each preferably 15°C or higher and 40°C or lower.

In step 1, the expansion ratio at which the liquid composition is foamed to obtain the foam depends on the application of the gypsum slurry and the like; however, the ratio is, from the viewpoint of economy, preferably 5 or more, more preferably 7 or more, further preferably 10 or more, and, from the viewpoint of mixability, preferably 30 or less, more preferably 25 or less, further preferably 20 or less.

In step 2, the proportion of the foam mixed relative to the clay-containing gypsum slurry depends on the application of the gypsum slurry and the like; however, the proportion is, from the viewpoint of reducing the specific gravity of the hardened product, preferably 50 volume% or more, more preferably 100 volume% or more, further preferably 150 volume% or more, and, from the viewpoint of the strength of the hardened product, preferably 400 volume% or less, more preferably 300 volume% or less, further preferably 200 volume% or less. In this production method, admixtures and admixture materials known in the art may be mixed in step 1 and/or step 2.

After step 2, the following step 3 is further carried out to produce a hardened product of the clay-containing gypsum slurry, i.e., a gypsum board:
step 3: a step of molding and curing the clay-containing gypsum slurry obtained in step 2.

The molding and curing may be performed by a known method. For example, a gypsum board may be prepared by referring to the section entitled "Production of Gypsum Board" on pages 322 to 324 of "Gypsum and Lime Handbook" (edited by the Institute of Gypsum & Lime Research).

### [Method for improving water-reducing ability of clay-containing gypsum slurry]

The dispersant for a clay-containing gypsum slurry of the present invention is capable of improving the water-reducing ability of a clay-containing gypsum slurry when mixed thereinto.

That is, the present invention relates to a method for improving the water-reducing ability of a clay-containing gypsum slurry, the method including mixing into a clay-containing gypsum slurry the dispersant for a clay-containing gypsum slurry of the present invention, the dispersant containing component (A).

The clay-containing gypsum slurry into which the dispersant for a clay-containing gypsum slurry of the present invention has been mixed is the clay-containing gypsum slurry of the present invention.

In the method for improving the water-reducing ability of a clay-containing gypsum slurry of the present invention, it is preferred that the clay-containing gypsum slurry be produced by the method described for producing the clay-containing gypsum slurry of the present invention.

That is, the method for improving the water-reducing ability of a clay-containing gypsum slurry of the present invention preferably includes the following step 1 and step 2:
<step 1>
   a step of foaming a liquid composition containing component (C) and water to obtain a foam; and
<step 2>
   a step of mixing clay-containing gypsum, water, the foam obtained in step 1, and the dispersant for a clay-containing gypsum slurry of the present invention, the dispersant containing component (A).

In the method for improving the water-reducing ability of a clay-containing gypsum slurry of the present invention, the mixing amounts of the respective components and the mass ratios thereof may be determined, as appropriate, by applying the contents of the respective components and the mass ratios thereof described for the clay-containing gypsum slurry of the present invention, with the contents of the respective components being replaced by the mixing amounts.

The embodiments described for the dispersant for a clay-containing gypsum slurry of the present invention, for the method for producing a dispersant for a clay-containing gypsum slurry of the present invention, for the clay-containing gypsum slurry of the present invention, and for the method for producing a clay-containing gypsum slurry of the present invention may be applied, as appropriate, to the method for improving the water-reducing ability of a clay-containing gypsum slurry of the present invention.

### [Additive kit for clay-containing gypsum slurry]

The present invention relates to an additive kit for a clay-containing gypsum slurry, the kit being composed of a first agent containing component (A) and a second agent containing component (C).

The first agent containing component (A) is the dispersant for a clay-containing gypsum slurry of the present invention, and the embodiments described for the dispersant for a clay-containing gypsum slurry of the present invention and for the method for producing a dispersant for a clay-containing gypsum slurry of the present invention may be applied, as appropriate, to the first agent.

The second agent containing component (C) is the agent used in step 1 of the method for producing a clay-containing gypsum slurry of the present invention.

By using the additive kit for a clay-containing gypsum slurry of the present invention, the method for producing a clay-containing gypsum slurry of the present invention and the method for improving the water-reducing ability of a clay-containing gypsum slurry of the present invention can be carried out more easily.

The embodiments described for the dispersant for a clay-containing gypsum slurry of the present invention, for the method for producing a dispersant for a clay-containing gypsum slurry of the present invention, for the clay-containing gypsum slurry of the present invention, for the method for producing a clay-containing gypsum slurry of the present invention, and for the method for improving the water-reducing ability of a clay-containing gypsum slurry of the present invention may be applied, as appropriate, to the additive kit for a clay-containing gypsum slurry of the present invention.

The content of component (C) in the second agent is, from the viewpoints of stabilizing the foam during foaming, increasing the bubble size in a hydraulic composition, and reducing the weight of a hydraulic composition, preferably 0.5 mass% or more, more preferably 1 mass% or more, further preferably 1.5 mass% or more, and, from the viewpoints of increasing the bubble size in a hydraulic composition and making bubbles in a hydraulic composition more uniform, preferably 20 mass% or less, more preferably 10 mass% or less, further preferably 5 mass% or less.

The second agent may further contain water.

When the second agent contains water, the content of water is preferably 10 mass% or more, more preferably 20 mass% or more, further preferably 30 mass% or more, furthermore preferably 40 mass% or more, and preferably 90 mass% or less, more preferably 80 mass% or less, further preferably 70 mass% or less.

In addition to the above-described embodiments, the present invention discloses the following preferred embodiments.

In one embodiment, in the clay-containing gypsum slurry of the present invention, the content of component (A), per 100 parts by mass of gypsum, may be, from the viewpoints of improving the water-reducing ability, suppressing delay in setting, and increasing the bubble size in the hardened gypsum product, preferably 0.01 parts by mass or more, more preferably 0.04 parts by mass or more, further preferably 0.06 parts by mass or more, furthermore preferably 0.08 parts by mass or more, and preferably 0.5 parts by mass or less, more preferably 0.4 parts by mass or less, further preferably 0.3 parts by mass or less. The clay-containing gypsum slurry of the present invention may contain component (B), and the mass ratio of the content of component (A) to the total content of components (A) and (B), (A)/((A)+(B)), may be, from the viewpoints of improving the water-reducing ability, suppressing delay in setting, and increasing the bubble size in the hardened gypsum product, preferably 0.2 or more, more preferably 0.3 or more, further preferably 0.4 or more, and preferably 1.0 or less, more preferably 0.8 or less, further preferably 0.6 or less.

In one embodiment, in the clay-containing gypsum slurry of the present invention, the weight-average molecular weight (Mw) of component (A) may be, from the viewpoints of improving the water-reducing ability of the clay-containing gypsum slurry, suppressing delay in setting, and increasing the bubble size in the hardened gypsum product, 50,000 or more, preferably 80,000 or more, more preferably 100,000 or more, further preferably 120,000 or more, and 250,000 or less, preferably 230,000 or less, more preferably 200,000 or less, further preferably 180,000 or less. The clay-containing gypsum slurry of the present invention may contain component (B), and the mass ratio of the content of component (A) to the total content of components (A) and (B), (A)/((A)+(B)), may be, from the viewpoints of improving the water-reducing ability, suppressing delay in setting, and increasing the bubble size in the hardened gypsum product, preferably 0.2 or more, more preferably 0.3 or more, further preferably 0.4 or more, and preferably 1.0 or less, more preferably 0.8 or less, further preferably 0.6 or less.

In one embodiment, in the method for producing a clay-containing gypsum slurry of the present invention, the mixing amount of component (A), per 100 parts by mass of gypsum, may be, from the viewpoints of improving the water-reducing ability, suppressing delay in setting, and increasing the bubble size in the hardened gypsum product, preferably 0.01 parts by mass or more, more preferably 0.04 parts by mass or more, further preferably 0.06 parts by mass or more, furthermore preferably 0.08 parts by mass or more, and preferably 0.5 parts by mass or less, more preferably 0.4 parts by mass or less, further preferably 0.3 parts by mass or less. The method for producing a clay-containing gypsum slurry of the present invention may include mixing component (B), and the mass ratio of the mixing amount of component (A) to the total mixing amount of components (A) and (B), (A)/((A)+(B)), may be, from the viewpoints of improving the water-reducing ability, suppressing delay in setting, and increasing the bubble size in the hardened gypsum product, preferably 0.2 or more, more preferably 0.3 or more, further preferably 0.4 or more, and preferably 1.0 or less, more preferably 0.8 or less, further preferably 0.6 or less.

In one embodiment, in the method for producing a clay-containing gypsum slurry of the present invention, the weight-average molecular weight (Mw) of component (A) may be, from the viewpoints of improving the water-reducing ability of a clay-containing gypsum slurry, suppressing delay in setting, and increasing the bubble size in the hardened gypsum product, 50,000 or more, preferably 80,000 or more, more preferably 100,000 or more, further preferably 120,000 or more, and 250,000 or less, preferably 230,000 or less, more preferably 200,000 or less, further preferably 180,000 or less. The method for producing a clay-containing gypsum slurry of the present invention may include mixing component (B), and the mass ratio of the mixing amount of component (A) to the total mixing amount of components (A) and (B), (A)/((A)+(B)), may be, from the viewpoints of improving the water-reducing ability, suppressing delay in setting, and increasing the bubble size in the hardened gypsum product, preferably 0.2 or more, more preferably 0.3 or more, further preferably 0.4 or more, and preferably 1.0 or less, more preferably 0.8 or less, further preferably 0.6 or less.

In one embodiment, in the use of a dispersant in a clay-containing gypsum slurry of the present invention, the dispersant may contain component (B), and the weight-average molecular weight (Mw) of component (A) may be, from the viewpoints of improving the water-reducing ability of a clay-containing gypsum slurry, suppressing delay in setting, and increasing the bubble size in the hardened gypsum product, 50,000 or more, preferably 80,000 or more, more preferably 100,000 or more, further preferably 120,000 or more, and 250,000 or less, preferably 230,000 or less, more preferably 200,000 or less, further preferably 180,000 or less. The mass ratio of the content of component (A) to the total content of components (A) and (B), (A)/((A)+(B)), may be, from the viewpoints of improving the water-reducing ability, suppressing delay in setting, and increasing the bubble size in the hardened gypsum product, preferably 0.2 or more, more preferably 0.3 or more, further preferably 0.4 or more, and preferably 1.0 or less, more preferably 0.8 or less, further preferably 0.6 or less.

In one embodiment, in the method for improving the water-reducing ability of a clay-containing gypsum slurry of the present invention, the dispersant for a clay-containing gypsum slurry may contain component (B), and the mixing amount of component (A), per 100 parts by mass of gypsum, may be, from the viewpoints of improving the water-reducing ability, suppressing delay in setting, and increasing the bubble size in the hardened gypsum product, preferably 0.01 parts by mass or more, more preferably 0.04 parts by mass or more, further preferably 0.06 parts by mass or more, furthermore preferably 0.08 parts by mass or more, and preferably 0.5 parts by mass or less, more preferably 0.4 parts by mass or less, further preferably 0.3 parts by mass or less. The mass ratio of the mixing amount of component (A) to the total mixing amount of components (A) and (B), (A)/((A)+(B)), may be, from the viewpoints of improving the water-reducing ability, suppressing delay in setting, and increasing the bubble size in the hardened gypsum product, preferably 0.2 or more, more preferably 0.3 or more, further preferably 0.4 or more, and preferably 1.0 or less, more preferably 0.8 or less, further preferably 0.6 or less.

In one embodiment, in the method for improving the water-reducing ability of a clay-containing gypsum slurry of the present invention, the dispersant for a clay-containing gypsum slurry may contain component (B), and the weight-average molecular weight (Mw) of component (A) may be, from the viewpoints of improving the water-reducing ability of a clay-containing gypsum slurry, suppressing delay in setting, and increasing the bubble size in the hardened gypsum product, 50,000 or more, preferably 80,000 or more, more preferably 100,000 or more, further preferably 120,000 or more, and 250,000 or less, preferably 230,000 or less, more preferably 200,000 or less, further preferably 180,000 or less. The mass ratio of the mixing amount of component (A) to the total mixing amount of components (A) and (B), (A)/((A)+(B)), may be, from the viewpoints of improving the water-reducing ability, suppressing delay in setting, and increasing the bubble size in the hardened gypsum product, preferably 0.2 or more, more preferably 0.3 or more, further preferably 0.4 or more, and preferably 1.0 or less, more preferably 0.8 or less, further preferably 0.6 or less.

In one embodiment, in the additive kit for a clay-containing gypsum slurry of the present invention, the first kit may contain component (B), and the weight-average molecular weight (Mw) of component (A) may be, from the viewpoints of improving the water-reducing ability of a clay-containing gypsum slurry, suppressing delay in setting, and increasing the bubble size in the hardened gypsum product, 50,000 or more, preferably 80,000 or more, more preferably 100,000 or more, further preferably 120,000 or more, and 250,000 or less, preferably 230,000 or less, more preferably 200,000 or less, further preferably 180,000 or less. The mass ratio of the content of component (A) to the total content of components (A) and (B) in the first kit, (A)/((A)+(B)), may be, from the viewpoints of improving the water-reducing ability, suppressing delay in setting, and increasing the bubble size in the hardened gypsum product, preferably 0.2 or more, more preferably 0.3 or more, further preferably 0.4 or more, and preferably 1.0 or less, more preferably 0.8 or less, further preferably 0.6 or less.

### Examples

Components (A) and (B) used in the Examples and Comparative Examples are shown in Table 1.

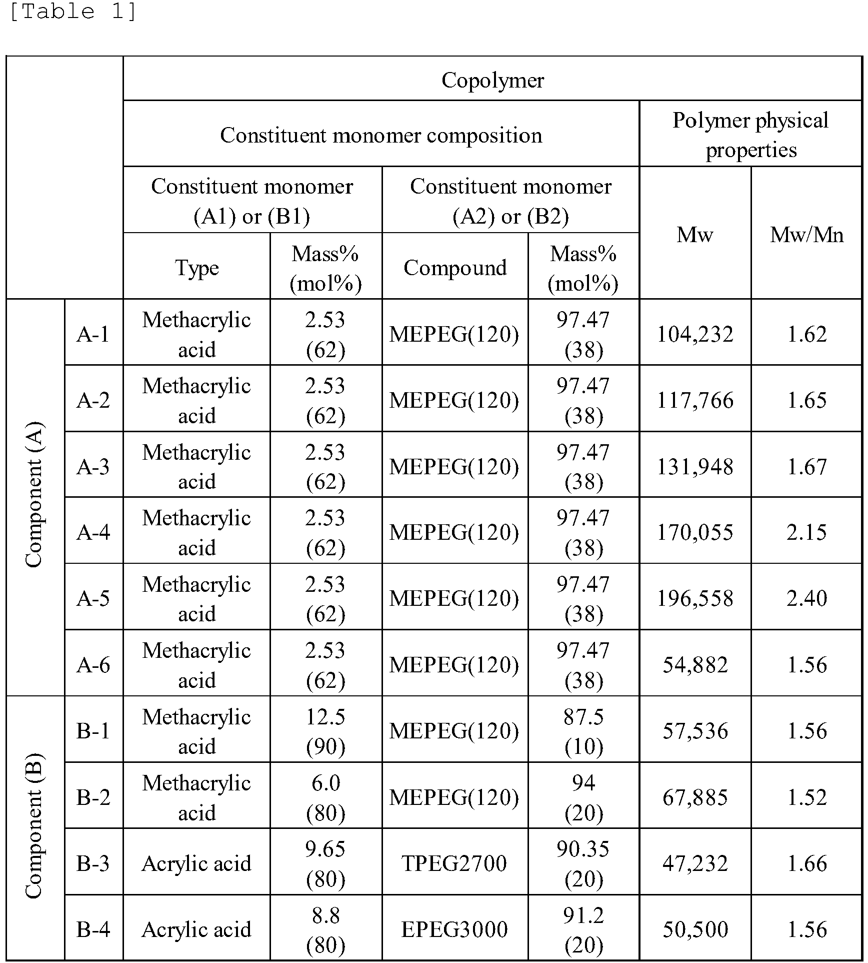

The following were used as the constituent monomers in Table 1.
· MEPEG(120): methoxypolyethylene glycol (120) monomethacrylate (the number in parentheses indicates the average number of added moles of ethylene oxide)
· TPEG2700: isoprenyl ether ethylene oxide adduct (average number of added moles of ethylene oxide: 60; weight-average molecular weight (Mw): 2,700)
· EPEG3000: vinyl ether ethylene oxide adduct (average number of added moles of ethylene oxide: 65; weight-average molecular weight (Mw): 3,000)

### <Production of copolymer A-6>

A glass reaction vessel equipped with a stirrer was charged with 303.64 g of water, purged with nitrogen while stirring, and heated to 80°C under a nitrogen atmosphere.

Solution (i), prepared by mixing and dissolving 1.28 g of mercaptoethanol in 653.2 g of an aqueous solution of MEPEG(120) (active content: 89.117 mass%; water content: 40.65 mass%; methacrylic acid content as an impurity: 2.255%), and solution (ii), prepared by dissolving 2.50 g of ammonium persulfate in 14.15 g of water, were each added dropwise into the vessel over 1.5 hours. Next, a solution prepared by dissolving 1.25 g of ammonium persulfate in 7.07 g of water was added dropwise over 30 minutes, and the mixture was then aged at the same temperature (80°C) for 1 hour. After completion of aging, the mixture was neutralized with 11.36 g of a 48% aqueous sodium hydroxide solution to obtain a reaction product containing water and copolymer A-6 having a weight-average molecular weight of 54,882.

The other copolymers in Table 1 were produced in the same manner as above, except that the types and the amounts of constituent monomers used were changed. Further, copolymers A-1 to A-6 in Table 1, which differ in molecular weight, were produced using the same types and amounts of constituent monomers but changing the amount of mercaptoethanol as a chain transfer agent and the amount of ammonium persulfate as an initiator.

The weight-average molecular weights (Mw) and the ratios Mw/Mn of weight-average molecular weight (Mw) to number-average molecular weight (Mn) for the respective copolymers shown in Table 1 were measured by gel permeation chromatography (GPC) under the following conditions.

### *GPC conditions

Instrument: GPC (HLC-8320GPC), manufactured by Tosoh Corporation
Columns: G4000PWXL + G2500PWXL (manufactured by Tosoh Corporation)
Eluent: 0.2 M phosphate buffer/CH₃CN = 9/1
Flow rate: 1.0 mL/min
Column temperature: 40°C
Detection: RI
Sample concentration: 0.2 mg/mL
Standards: polyethylene glycol standards (monodisperse polyethylene glycols having known molecular weights: 250,000, 145,000, 87,500, 46,000, and 24,000)

### [Analysis of clay-containing gypsum]

As the clay-containing gypsum, natural gypsum 1 and natural gypsum 2 were used. The composition analysis of natural gypsum 1 and natural gypsum 2 was performed by XRF analysis, and the silicon and phosphorus contents were quantified by ICP analysis. The respective measurement methods are shown below.

### <XRF analysis>

50 mg of natural gypsum 1 was placed on filter paper, covered with a PET film, and pressed to obtain a sample. The prepared sample was measured using an X-ray fluorescence spectrometer under the following conditions. The results are shown in Table 2.
Analytical instrument: Primus II; wavelength dispersive X-ray fluorescence spectrometer, manufactured by Rigaku Holdings Corporation
2θ (θ: analytical angle): varies depending on the element measured
Target: rhodium tube
Tube voltage: 50 kV
Tube current: 50 mA
Analyzing crystals: LiF (200), Ge, PET, RX25
Detectors: SC, PC

### <ICP analysis>

The reagents used are shown below.
Sulfuric acid: for precision analysis, FUJIFILM Wako Pure Chemical Corporation
Hydrochloric acid: for metal analysis, KANTO CHEMICAL CO., INC.
Nitric acid: EL Grade, KANTO CHEMICAL CO., INC.
Hydrogen peroxide: for atomic absorption spectrometry, FUJIFILM Wako Pure Chemical Corporation
Sodium carbonate: Special Grade, FUJIFILM Wako Pure Chemical Corporation
Boric acid: Special Grade, FUJIFILM Wako Pure Chemical Corporation
Elemental standard solutions: for atomic absorption spectrometry, 1000 mg/L, manufactured by KANTO CHEMICAL CO., INC.
Ultrapure water: water produced using a Milli-Q ultrapure water system, Millipore Corporation

### 1. Sample preparation

### (i) Silicon pretreatment method

0.1 g of the sample was weighed into a platinum crucible, and 2 g of an alkaline flux (sodium carbonate: boric acid = 1:0.4) was added. The mixture was melted in an electric furnace at 950°C. The crucible was covered with a watch glass, and ultrapure water and 10 mL of hydrochloric acid (6 mol/L) were added. The mixture was heated on a hot plate at 70 to 80°C to dissolve the melt. After cooling, the solution was made up to 100 mL with ultrapure water, and the resulting liquid was used as a measurement solution. When the concentration exceeded the calibration range, the liquid was diluted as appropriate and then used as a measurement solution.

### (ii) Phosphorus pretreatment method

0.1 g of the sample was placed in a decomposition vessel, and 2 mL of sulfuric acid and appropriate amounts of nitric acid and hydrogen peroxide were added. The mixture was subjected to wet decomposition, and made up to 50 mL with ultrapure water. Insoluble residues were then allowed to settle, and the supernatant was used as a sample measurement solution.

### (iii) Preparation of calibration standards

Calibration standards having concentrations of 0.1 to 20 mg/L were prepared using the standard solutions for atomic absorption spectrometry (concentration of each element: 1000 mg/L). The alkaline flux and hydrochloric acid were added to the solution for silicon quantification in amounts equivalent to those in the sample. Sulfuric acid was added to the solution for phosphorus quantification so that the concentration was 4%.

### 2. Measurement

The samples prepared in 1 were subjected to elemental analysis using an ICP optical emission spectrometer under the following conditions. The results are shown in Table 2.
Analytical instrument: iCAP 6500 Duo, manufactured by Thermo Fisher Scientific
Wavelength: Si 251.611 nm; P 213.618 nm
RF power: 1150 W
Coolant gas flow: 12 L/min
Nebulizer gas flow: 0.70 L/min
Auxiliary gas flow: 0.5 L/min
Pump rate: 50 rpm

**[Table 2]**

| | XRF analysis (kcps) | | | | | ICP analysis (ppm) | |
|---|---|---|---|---|---|---|---|
| | Sr | Ca | S | P | Si | Si | P |
| Natural gypsum 1 | 15 | 800 | 1200 | 0.3 | 140 | 49000 | 80 |
| Natural gypsum 2 | 12 | 880 | 1300 | 0.4 | 28 | 7100 | 50 |

Note that the XRF values are qualitative values indicating peak intensities, rather than quantitative values.

### <Methylene blue adsorption test>

The clay contents of natural gypsum 1 and natural gypsum 2 were measured by the following method using the methylene blue adsorption test (JCAS I-61-2008). The methylene blue adsorption test is generally known as a method for measuring the active clay content in sand. The measurement principle is that the amount of methylene blue adsorbed on sand is determined by titration, and the result is evaluated on the basis of the degree of halo formation of a spot on filter paper. The clay content of natural gypsum 1, as determined in accordance with the methylene blue adsorption test (JCAS I-61-2008), was 4.93 mass%. The clay content of natural gypsum 2, as determined in accordance with the methylene blue adsorption test (JCAS I-61-2008), was 0.71 mass%.

### [Evaluation of water-reducing ability]

A paste cone (diameter: 50 mm; height: 50 mm) was filled with a clay-containing gypsum slurry prepared by mixing natural gypsum 1 and water containing component (A) and/or component (B). The paste cone was placed on a 30 cm × 30 cm plastic plate and lifted vertically 30 seconds after natural gypsum 1 first came into contact with water. The maximum diameter of the clay-containing gypsum slurry spread on the plastic plate and the diameter of the clay-containing gypsum slurry in the direction perpendicular to the maximum diameter on the plastic plate were measured, and the average value of those diameters was taken as the flowability. The amount of water required to obtain a flowability of 125 mm was defined as corresponding to a water-reducing ratio of 0% and used as the reference. The water-reducing ratio was defined and measured as the ratio by which the amount of water could be reduced in each system in which the blending amounts of component (A) and/or component (B) in the clay-containing gypsum slurry were adjusted such that the mass ratio (A)/((A)+(B)) of the blending amount of component (A) to the total blending amount of components (A) and (B) was as shown in Table 3 and the total blending amount of components (A) and (B) per 100 parts by mass of gypsum was set to the blending amount shown in Table 3. That is, for example, when a clay-containing gypsum slurry prepared using only natural gypsum 1 (G) and water (W) requires 200 g of water (W/G × 100 = 80 mass%) to attain a flowability of 125 mm, and when components (A) and (B) are added to the clay-containing gypsum slurry in a total amount of 0.256 parts by mass per 100 parts by mass of gypsum and the resulting slurry requires 160 g of water (W/G × 100 = 64 mass%) to attain a flowability of 125 mm, the water-reducing ratio is calculated as 1 - (160/200) = 0.2 and evaluated as 20%. The results are shown in Table 3.

Further, the water-reducing ability was evaluated in the same manner as above, with natural gypsum 1 being replaced with natural gypsum 2. The results are shown in Table 4.

**[Table 1]**

| | | Clay-containing gypsum slurry | | | Water-reducing ratio (%) at each blending amount | | | |
|---|---|---|---|---|---|---|---|---|
| | | Component (A) | Component (B) | (A)/[(A)+(B)] (mass ratio) | Total blending amount of components (A) and (B) per 100 parts by mass of gypsum | | | |
| | | Type | Type | | 0.16 parts by mass | 0.32 parts by mass | 0.48 parts by mass | 0.64 parts by mass |
| Comparative example | 1-1 | - | B-1 | 0 | -6.8 | -1.0 | 4.0 | 10.0 |
| Example | 1-1 | A-1 | B-1 | 0.20 | 1.6 | 8.6 | 14.5 | 20.3 |
| | 1-2 | A-2 | B-1 | 0.20 | 1.7 | 9.0 | 15.6 | 19.8 |
| | 1-3 | A-3 | B-1 | 0.60 | 1.8 | 9.5 | 15.8 | 20.0 |
| | 1-4 | A-3 | B-2 | 0.20 | 2.4 | 11.4 | 16.7 | 19.3 |
| | 1-5 | A-3 | B-2 | 0.60 | 2.0 | 13.0 | 17.0 | 18.2 |
| | 1-6 | A-3 | B-3 | 0.60 | 1.0 | 7.3 | 13.2 | 19.2 |
| | 1-7 | A-3 | B-4 | 0.60 | 0.8 | 7.7 | 12.9 | 18.9 |
| | 1-8 | A-6 | B-1 | 0.60 | Not measured | 5.5 | 9.9 | Not measured |
| | 1-9 | A-6 | B-2 | 0.40 | Not measured | 6.4 | 10.3 | Not measured |
| | 1-10 | A-6 | B-2 | 0.60 | Not measured | 8.0 | 12.7 | Not measured |
| | 1-11 | A-6 | - | 1.00 | Not measured | 10.2 | 12.0 | Not measured |
| | 1-12 | A-6 | B-3 | 0.60 | Not measured | 5.2 | 8.8 | Not measured |
| | 1-13 | A-6 | B-4 | 0.60 | Not measured | 5.6 | 10.2 | Not measured |
| | 1-14 | A-4 | B-2 | 0.60 | 1.6 | 12.2 | 16.5 | 18.1 |
| | 1-15 | A-5 | B-2 | 0.60 | 1.4 | 11.8 | 15.8 | 17.9 |

**[Table 4]**

| | | Clay-containing gypsum slurry | | | Water-reducing ratio (%) at each blending amount | | |
|---|---|---|---|---|---|---|---|
| | | Component (A) | Component (B) | (A)/[(A)+(B)] (mass ratio) | Total blending amount of components (A) and (B) per 100 parts by mass of gypsum | | |
| | | Type | Type | | 0.06 parts by mass | 0.24 parts by mass | 0.36 parts by mass |
| Comparative example | 1-2 | - | B-1 | 0 | -1.1 | 3.8 | 10.0 |
| Example | 1-16 | A-2 | B-1 | 0.20 | 1.5 | 10.0 | 14.0 |
| | 1-17 | A-2 | B-1 | 0.60 | 3.2 | 11.0 | 11.5 |

In Tables 3 and 4, the blending amounts of components (A) and (B), which are used for calculating the mass ratio (A)/((A)+(B)) and the total blending amount of components (A) and (B) per 100 parts by mass of gypsum, are amounts based on the active contents.

For Examples 1-8 to 1-13, the water-reducing ratios indicated as "not measured" in Table 3 were not determined, since, in each Example, a water-reducing effect could be confirmed when the total amount of components (A) and (B) added per 100 parts by mass of gypsum was 0.32 parts by mass or 0.48 parts by mass, and it could be inferred that a water-reducing effect would also be obtained when the total amount of components (A) and (B) added per 100 parts by mass of gypsum was 0.16 parts by mass or 0.64 parts by mass.

### [Evaluation of setting properties]

200 g of natural gypsum 1, and 120 g of water to which component (A) and/or component (B) had been added, were placed in a 500-mL disposable cup such that the blending amounts of components (A) and (B) per 100 parts by mass of gypsum were as shown in Table 4. The mixture was stirred for 10 seconds using a hand mixer (MK-H4, manufactured by Panasonic Corporation) at setting 3 (1,500 rpm) to prepare a clay-containing gypsum slurry. The setting time for each prepared clay-containing gypsum slurry was measured.

The "setting time" refers to the time required for the gypsum slurry to set after addition of water (water containing component (A) and/or component (B)) to natural gypsum 1, and "initial setting time" and "final setting time" were measured during the process of setting. The setting time was measured as follows.
a) The Vicat needle apparatus specified in JIS R 5201 was used for measuring the setting time. The standard needle for gypsum slurry was a metal needle having a length of 45 mm and a diameter of 2 mm, with a flat-cut tip. The total mass of the movable part that descends with the needle was 300 ± 1 g.
b) The thermometer used was a thermometer of thermometer symbol C specified in JIS B 7411-1, or a temperature measuring instrument having equivalent or higher accuracy.
c) In the measurement method, each prepared clay-containing gypsum slurry was poured into a cylindrical mold (inner diameter: 78 ± 5 mm; height: 40.0 ± 0.5 mm) placed on a glass plate, and the thermometer was inserted into the center of the slurry. The following measurements were then performed.
   1) Initial setting time: the time required for the standard needle of the measuring instrument to stop at a position approximately 1 mm above the bottom surface of the specimen was measured.
   2) Final setting time: the time required for the thermometer to indicate the maximum temperature was measured.

The results are shown in Table 5.

In addition, the setting properties were evaluated in the same manner as above, with natural gypsum 1 being replaced with natural gypsum 2. The results are shown in Table 6.

Further, Table 7 shows formulation examples of clay-containing gypsum slurries. The clay-containing gypsum slurries of these formulation examples can also provide shortened setting time, like the clay-containing gypsum slurries of the Examples in Tables 5 and 6.

**[Table 5]**

| | | Clay-containing gypsum slurry | | | | | Setting time (min) | |
|---|---|---|---|---|---|---|---|---|
| | | Component (A) | | Component (B) | | (A)/[(A)+(B)] (mass ratio) | | |
| | | Type | Blending amount (parts by mass) | Type | Blending amount (parts by mass) | | Initial | Final |
| Comparative example | 2-1 | - | 0 | B-1 | 0.520 | 0 | 4.5 | 6.5 |
| Example | 2-1 | A-6 | 0.160 | B-1 | 0.240 | 0.40 | 2.0 | 3.0 |
| | 2-2 | A-6 | 0.252 | B-2 | 0.168 | 0.60 | 2.5 | 3.5 |
| | 2-3 | A-6 | 0.160 | B-2 | 0.240 | 0.40 | 2.0 | 3.0 |
| | 2-4 | A-6 | 0.400 | - | 0 | 1.00 | 2.0 | 3.0 |
| | 2-5 | A-6 | 0.176 | B-3 | 0.224 | 0.44 | 2.5 | 4.0 |
| | 2-6 | A-6 | 0.168 | B-4 | 0.252 | 0.40 | 2.0 | 4.0 |

**[Table 6]**

| | | Clay-containing gypsum slurry | | | | | Setting time (min) | |
|---|---|---|---|---|---|---|---|---|
| | | Component (A) | | Component (B) | | (A)/[(A)+(B)] (mass ratio) | | |
| | | Type | Blending amount (parts by mass) | Type | Blending amount (parts by mass) | | Initial | Final |
| Comparative example | 2-2 | - | 0 | B-1 | 0.240 | 0 | 4.0 | 6.0 |
| Example | 2-7 | A-6 | 0.024 | B-1 | 0.096 | 0.20 | 2.0 | 3.0 |

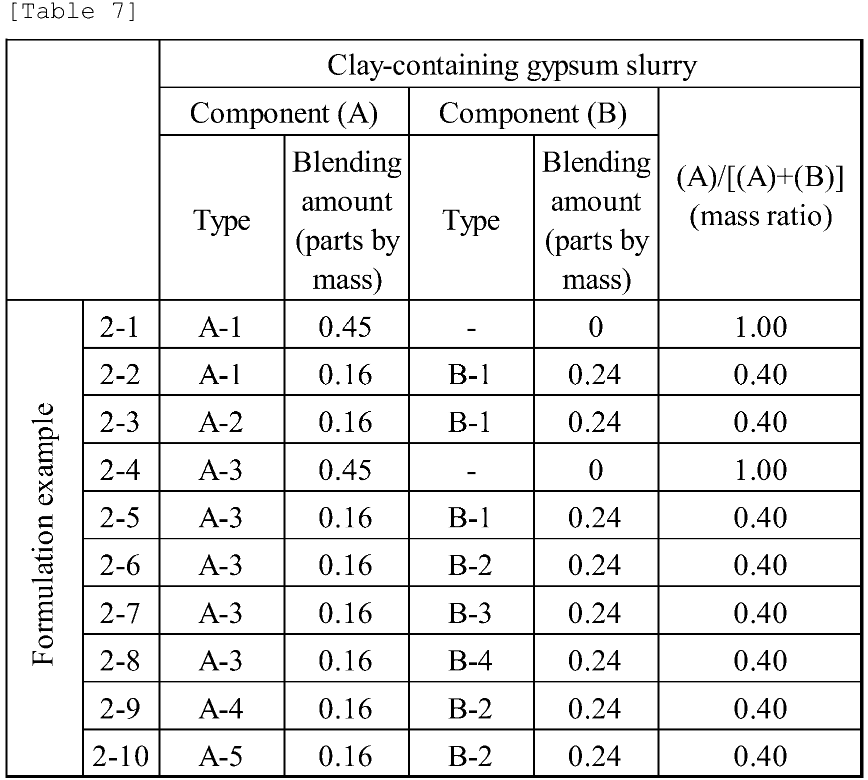

In Tables 5 to 7, the blending amounts of components (A) and (B) are the respective blending amounts of components (A) and (B) per 100 parts by mass of gypsum in the clay-containing gypsum slurry, based on the active contents. In addition, (A)/[(A)+(B)] (mass ratio) is the mass ratio (A)/((A)+(B)) of the blending amount of component (A) to the total blending amount of components (A) and (B) in the clay-containing gypsum slurry.

### [Preparation of bubble-containing clay-containing gypsum slurry]

A foaming agent composition containing, as component (C), sodium decyl sulfate (C10AS) and sodium lauryl sulfate (C12AS) at a mass ratio of C10AS/C12AS = 67/33 (mass%) and in a total amount of 100 mass% was diluted with water to prepare an aqueous solution having a concentration of 0.6 mass%. 30 g of the prepared aqueous solution was placed in a 1-L disposable cup and stirred for 60 seconds at 2,000 rpm (EUROSTAR 200 control, manufactured by IKA Japan K.K.) using a flat six-blade paddle impeller (FP-50, manufactured by AS ONE Corporation) to obtain a foam.

200 g of natural gypsum 1, and 120 g of water to which component (A) and/or component (B) had been added, were placed in a 500-mL disposable cup such that the blending amounts of components (A) and (B) per 100 parts by mass of gypsum were as shown in Table 8. The mixture was stirred for 10 seconds using a hand mixer (MK-H4, manufactured by Panasonic Corporation) at setting 3 (1,500 rpm) to prepare a clay-containing gypsum slurry before addition of foam.

The prepared clay-containing gypsum slurry was added in its entirety to 25 g of the foam prepared in the 1-L disposable cup, and the mixture was mixed for 30 seconds at 1,500 rpm using the flat six-blade paddle impeller in the 1-L disposable cup to obtain a bubble-containing clay-containing gypsum slurry.

### [Measurement of average bubble diameter in gypsum]

The obtained bubble-containing clay-containing gypsum slurry was poured into a mold for cylindrical specimens having a diameter of 5 cm and a height of 10 cm (Plamold, manufactured by Nifco Inc.) and allowed to stand at room temperature for at least 1 hour. The hardened gypsum slurry was removed from the mold for cylindrical specimens and dried by allowing it to stand in a constant-temperature bath at 60°C for 24 hours. The hardened product was then cut at a height of 5 cm to prepare a cross section thereof. The cross section was observed under a digital microscope, and the diameters of 100 arbitrarily selected bubble cross sections were measured. The average bubble diameter was calculated from the arithmetic mean of those diameters. Note that, in measuring the diameter of a bubble cross section, when the bubble cross section was circular, the diameter thereof was used; when the bubble cross section was oval, the major axis thereof was used; and when the bubble cross section was irregular in shape, the longest portion thereof was used as the diameter. The results are shown in Table 8. Note that the specific gravities of the obtained hardened gypsum products of the Examples and Comparative Examples were all approximately 0.5.

In addition, a bubble-containing clay-containing gypsum slurry was prepared in the same manner as above, with natural gypsum 1 being replaced with natural gypsum 2, and the average bubble diameter in the gypsum was measured in the same manner as above. The results are shown in Table 9.

Further, Table 10 shows formulation examples of bubble-containing clay-containing gypsum slurries, as in Tables 8 and 9. Like the bubble-containing clay-containing gypsum slurries of the Examples in Tables 8 and 9, the bubble-containing clay-containing gypsum slurries of these formulation examples can increase the average bubble diameter in the hardened gypsum product compared with the Comparative Examples in Tables 8 and 9.

**[Table 8]**

| | | Bubble-containing clay-containing gypsum slurry | | | | | Average bubble diameter after hardening (µm) |
|---|---|---|---|---|---|---|---|
| | | Component (A) | | Component (B) | | (A)/[(A)+(B)] (mass ratio) | |
| | | Type | Blending amount (parts by mass) | Type | Blending amount (parts by mass) | | |
| Comparative example | 3-1 | - | 0 | B-1 | 0.52 | 0 | 231 |
| Example | 3-1 | A-1 | 0.48 | - | 0 | 1.00 | 257 |
| | 3-2 | A-6 | 0.276 | B-1 | 0.184 | 0.60 | 271 |
| | 3-3 | A-6 | 0.27 | B-2 | 0.18 | 0.60 | 292 |
| | 3-4 | A-1 | 0.084 | B-1 | 0.336 | 0.20 | 311 |
| | 3-5 | A-2 | 0.084 | B-1 | 0.336 | 0.20 | 320 |
| | 3-6 | A-3 | 0.252 | B-1 | 0.168 | 0.60 | 312 |
| | 3-7 | A-3 | 0.084 | B-2 | 0.336 | 0.20 | 309 |
| | 3-8 | A-3 | 0.228 | B-2 | 0.152 | 0.60 | 332 |
| | 3-9 | A-3 | 0.078 | B-1 | 0.312 | 0.20 | 318 |
| | 3-10 | A-3 | 0.47 | - | 0 | 1.00 | 266 |
| | 3-11 | A-3 | 0.282 | B-4 | 0.188 | 0.60 | 250 |

**[Table 9]**

| | | Bubble-containing clay-containing gypsum slurry | | | | | Average bubble diameter after hardening (µm) |
|---|---|---|---|---|---|---|---|
| | | Component (A) | | Component (B) | | (A)/[(A)+(B)] (mass ratio) | |
| | | Type | Blending amount (parts by mass) | Type | Blending amount (parts by mass) | | |
| Comparative example | 3-2 | - | 0 | B-1 | 0.24 | 0 | 304 |
| Example | 3-12 | A-6 | 0.024 | B-1 | 0.096 | 0.20 | 366 |

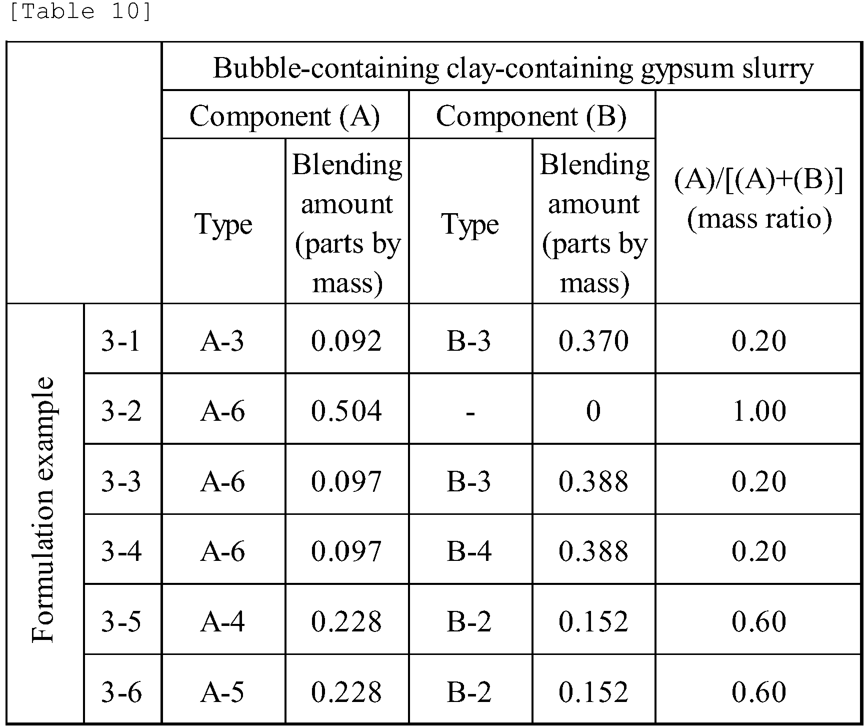

In Tables 8 to 10, the blending amounts of components (A) and (B) are the respective blending amounts of components (A) and (B) per 100 parts by mass of gypsum in the bubble-containing clay-containing gypsum slurry, based on the active contents. In addition, (A)/[(A)+(B)] (mass ratio) is the mass ratio (A)/((A)+(B)) of the blending amount of component (A) to the total blending amount of components (A) and (B) in the bubble-containing clay-containing gypsum slurry.

## Claims

1. A clay-containing gypsum slurry comprising the following component (A), clay-containing gypsum, and water:
component (A): a copolymer comprising, as constituent monomers, a constituent monomer (A1) represented by the following general formula (A1) and a constituent monomer (A2) represented by the following general formula (A2),
wherein a proportion of the constituent monomer (A1) to the total amount of the constituent monomers (A1) and (A2) is less than 5 mass%; and
the copolymer has a weight-average molecular weight of 50,000 or more and 250,000 or less: 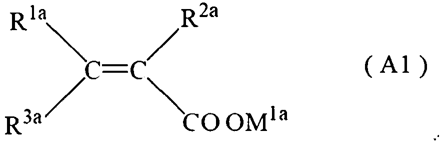
wherein:
R^{1a}, R^{2a}, and R^{3a} are the same or different, and each represent a hydrogen atom, a methyl group, or (CH₂)ᵣCOOM^{2a}; and when (CH₂)ᵣCOOM^{2a} forms an anhydride with COOM^{1a} or another (CH₂)ᵣCOOM^{2a}, M^{1a} and M^{2a} are absent from those groups;
M^{1a} and M^{2a} are the same or different, and each represent a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
r is a number of 0 or more and 2 or less; 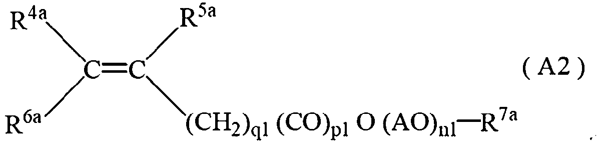
wherein:
R^{4a} and R^{5a} are the same or different, and each represent a hydrogen atom or a methyl group;
R^{6a} is a hydrogen atom, a methyl group, (CH₂)ᵣCOOM^{3a}, or (CH₂)_{q1}(CO)ₚ₁O(AO)ₙ₁R^{7a};
R^{7a} is a hydrogen atom or an alkyl group having 1 or more and 4 or less carbons;
AO is an alkyleneoxy group having 2 or more and 4 or less carbons;
n1 is the average number of added moles of AO, the number being 100 or more and 150 or less;
q1 is a number of 0 or more and 6 or less;
p1 is 0 or 1;
M^{3a} is a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
r is a number of 0 or more and 2 or less.

2. The clay-containing gypsum slurry according to claim 1, wherein the clay-containing gypsum has a clay content of 0.5 mass% or more and 6.0 mass% or less, as determined in accordance with the methylene blue adsorption test (JCAS I-61-2008).

3. The clay-containing gypsum slurry according to claim 1 or 2, further comprising the following component (B):
component (B): a copolymer comprising, as constituent monomers, a constituent monomer (B1) represented by the following general formula (B1) and a constituent monomer (B2) represented by the following general formula (B2),
wherein a proportion of the constituent monomer (B1) to the total amount of the constituent monomers (B1) and (B2) is 5 mass% or more and less than 13 mass%: 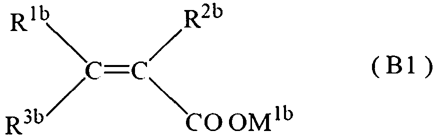
wherein:
R^{1b}, R^{2b}, and R^{3b} are the same or different, and each represent a hydrogen atom, a methyl group, or (CH₂)ᵣCOOM^{2b}; and when (CH₂)ᵣCOOM^{2b} forms an anhydride with COOM^{1b} or another (CH₂)ᵣCOOM^{2b}, M^{1b} and M^{2b} are absent from those groups;
M^{1b} and M^{2b} are the same or different, and each represent a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
r is a number of 0 or more and 2 or less; 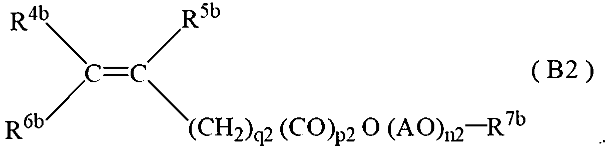
wherein:
R^{4b} and R^{5b} are the same or different, and each represent a hydrogen atom or a methyl group;
R^{6b} is a hydrogen atom, a methyl group, (CH₂)ᵣCOOM^{3b}, or (CH₂)_{q2}(CO)ₚ₂O(AO)ₙ₂R^{7b};
R^{7b} is a hydrogen atom or an alkyl group having 1 or more and 4 or less carbons,
AO is an alkyleneoxy group having 2 or more and 4 or less carbons;
n2 is the average number of added moles of AO, the number being 5 or more and 300 or less,
q2 is a number of 0 or more and 6 or less;
p2 is 0 or 1;
M^{3b} is a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
r is a number of 0 or more and 2 or less.

4. The clay-containing gypsum slurry according to claim 3, wherein a mass ratio of the content of the component (A) to the total content of the components (A) and (B), (A)/((A)+(B)), is 0.2 or more.

5. The clay-containing gypsum slurry according to claim 3 or 4, wherein the component (B) is a copolymer in which n2 in the general formula (B2) is 50 or more and 150 or less.

6. The clay-containing gypsum slurry according to any one of claims 1 to 5, further comprising, as a component (C), a foaming agent.

7. A method for producing a clay-containing gypsum slurry, comprising the following step 1 and step 2:
<step 1>
a step of foaming a liquid composition comprising (C) a foaming agent and water to obtain a foam; and
<step 2>
a step of mixing clay-containing gypsum, water, the foam obtained in step 1, and a dispersant for a clay-containing gypsum slurry, the dispersant comprising the following component (A):
component (A): a copolymer comprising, as constituent monomers, a constituent monomer (A1) represented by the following general formula (A1) and a constituent monomer (A2) represented by the following general formula (A2),
wherein a proportion of the constituent monomer (A1) to the total amount of the constituent monomers (A1) and (A2) is less than 5 mass%; and
the copolymer has a weight-average molecular weight of 50,000 or more and 250,000 or less: 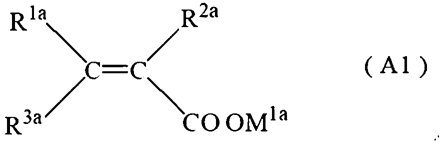
wherein:
R^{1a}, R^{2a}, and R^{3a} are the same or different, and each represent a hydrogen atom, a methyl group, or (CH₂)ᵣCOOM^{2a}; and when (CH₂)ᵣCOOM^{2a} forms an anhydride with COOM^{1a} or another (CH₂)ᵣCOOM^{2a}, M^{1a} and M^{2a} are absent from those groups;
M^{1a} and M^{2a} are the same or different, and each represent a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
r is a number of 0 or more and 2 or less; 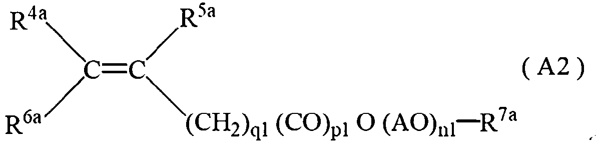
wherein:
R^{4a} and R^{5a} are the same or different, and each represent a hydrogen atom or a methyl group;
R^{6a} is a hydrogen atom, a methyl group, (CH₂)ᵣCOOM^{3a}, or (CH₂)_{q1}(CO)ₚ₁O(AO)ₙ₁R^{7a};
R^{7a} is a hydrogen atom or an alkyl group having 1 or more and 4 or less carbons;
AO is an alkyleneoxy group having 2 or more and 4 or less carbons;
n1 is the average number of added moles of AO, the number being 100 or more and 150 or less;
q1 is a number of 0 or more and 6 or less;
p1 is 0 or 1;
M^{3a} is a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
r is a number of 0 or more and 2 or less.

8. The method for producing a clay-containing gypsum slurry according to claim 7, wherein the dispersant for a clay-containing gypsum slurry further comprises the following component (B):
component (B): a copolymer comprising, as constituent monomers, a constituent monomer (B1) represented by the following general formula (B1) and a constituent monomer (B2) represented by the following general formula (B2),
wherein a proportion of the constituent monomer (B1) to the total amount of the constituent monomers (B1) and (B2) is 5 mass% or more and less than 13 mass%: 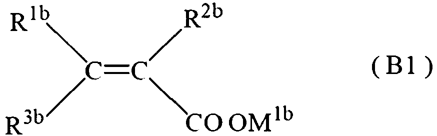
wherein:
R^{1b}, R^{2b}, and R^{3b} are the same or different, and each represent a hydrogen atom, a methyl group, or (CH₂)ᵣCOOM^{2b}; and when (CH₂)ᵣCOOM^{2b} forms an anhydride with COOM^{1b} or another (CH₂)ᵣCOOM^{2b}, M^{1b} and M^{2b} are absent from those groups;
M^{1b} and M^{2b} are the same or different, and each represent a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
r is a number of 0 or more and 2 or less; 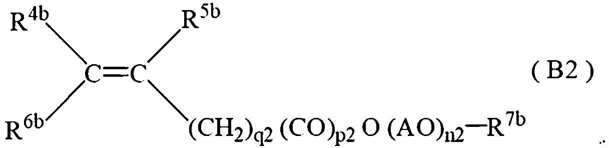
wherein:
R^{4b} and R^{5b} are the same or different, and each represent a hydrogen atom or a methyl group;
R^{6b} is a hydrogen atom, a methyl group, (CH₂)ᵣCOOM^{3b}, or (CH₂)_{q2}(CO)ₚ₂O(AO)ₙ₂R^{7b};
R^{7b} is a hydrogen atom or an alkyl group having 1 or more and 4 or less carbons,
AO is an alkyleneoxy group having 2 or more and 4 or less carbons;
n2 is the average number of added moles of AO, the number being 5 or more and 300 or less,
q2 is a number of 0 or more and 6 or less;
p2 is 0 or 1;
M^{3b} is a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
r is a number of 0 or more and 2 or less.

9. The method for producing a clay-containing gypsum slurry according to claim 7 or 8, wherein, in step 1, the liquid composition is foamed at an expansion ratio of 5 or more and 30 or less to obtain the foam.

10. A method for producing a hardened product of a clay-containing gypsum slurry according to any one of claims 7 to 9, further comprising, after step 2, the following step 3:
<step 3>
a step of molding and curing the clay-containing gypsum slurry obtained in step 2.

11. Use, in a clay-containing gypsum slurry, of a dispersant comprising the following component (A):
component (A): a copolymer comprising, as constituent monomers, a constituent monomer (A1) represented by the following general formula (A1) and a constituent monomer (A2) represented by the following general formula (A2),
wherein a proportion of the constituent monomer (A1) to the total amount of the constituent monomers (A1) and (A2) is less than 5 mass%; and
the copolymer has a weight-average molecular weight of 50,000 or more and 250,000 or less: 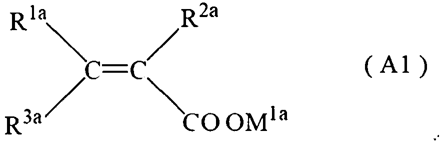
wherein:
R^{1a}, R^{2a}, and R^{3a} are the same or different, and each represent a hydrogen atom, a methyl group, or (CH₂)ᵣCOOM^{2a}; and when (CH₂)ᵣCOOM^{2a} forms an anhydride with COOM^{1a} or another (CH₂)ᵣCOOM^{2a}, M^{1a} and M^{2a} are absent from those groups;
M^{1a} and M^{2a} are the same or different, and each represent a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
r is a number of 0 or more and 2 or less; 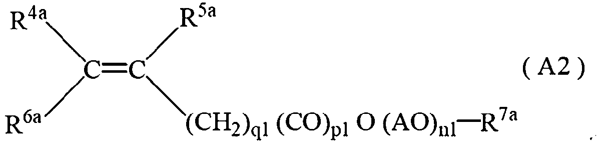
wherein:
R^{4a} and R^{5a} are the same or different, and each represent a hydrogen atom or a methyl group;
R^{6a} is a hydrogen atom, a methyl group, (CH₂)ᵣCOOM^{3a}, or (CH₂)_{q1}(CO)ₚ₁O(AO)ₙ₁R^{7a};
R^{7a} is a hydrogen atom or an alkyl group having 1 or more and 4 or less carbons;
AO is an alkyleneoxy group having 2 or more and 4 or less carbons;
n1 is the average number of added moles of AO, the number being 100 or more and 150 or less;
q1 is a number of 0 or more and 6 or less;
p1 is 0 or 1;
M^{3a} is a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
r is a number of 0 or more and 2 or less.

12. Use, in a clay-containing gypsum slurry, of the dispersant according to claim 11, the dispersant further comprising the following component (B):
component (B): a copolymer comprising, as constituent monomers, a constituent monomer (B1) represented by the following general formula (B1) and a constituent monomer (B2) represented by the following general formula (B2),
wherein a proportion of the constituent monomer (B1) to the total amount of the constituent monomers (B1) and (B2) is 5 mass% or more and less than 13 mass%: 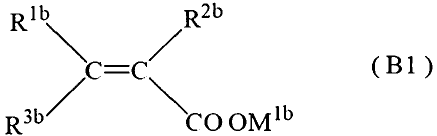
wherein:
R^{1b}, R^{2b}, and R^{3b} are the same or different, and each represent a hydrogen atom, a methyl group, or (CH₂)ᵣCOOM^{2b}; and when (CH₂)ᵣCOOM^{2d} forms an anhydride with COOM^{1b} or another (CH₂)ᵣCOOM^{2b}, M^{1b} and M^{2b} are absent from those groups;
M^{1b} and M^{2b} are the same or different, and each represent a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
r is a number of 0 or more and 2 or less; 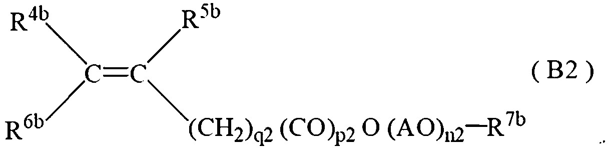
wherein:
R^{4b} and R^{5b} are the same or different, and each represent a hydrogen atom or a methyl group;
R^{6b} is a hydrogen atom, a methyl group, (CH₂)ᵣCOOM^{3b}, or (CH₂)_{q2}(CO)ₚ₂O(AO)ₙ₂R^{7b};
R^{7b} is a hydrogen atom or an alkyl group having 1 or more and 4 or less carbons,
AO is an alkyleneoxy group having 2 or more and 4 or less carbons;
n2 is the average number of added moles of AO, the number being 5 or more and 300 or less,
q2 is a number of 0 or more and 6 or less;
p2 is 0 or 1;
M^{3b} is a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
r is a number of 0 or more and 2 or less.

13. Use, in a clay-containing gypsum slurry, of the dispersant according to claim 12, the dispersant having a mass ratio of the content of the component (A) to the total content of the components (A) and (B), (A)/((A)+(B)), of 0.2 or more.

14. Use, in a clay-containing gypsum slurry, of the dispersant according to claim 12 or 13, the dispersant having a content of the component (B) of 20 mass% or more and 60 mass% or less.

15. Use, in a clay-containing gypsum slurry, of the dispersant according to any one of claims 12 to 15, the component (B) being a copolymer in which n2 in the general formula (B2) is 50 or more and 150 or less.

16. A method for improving the water-reducing ability of a clay-containing gypsum slurry, comprising mixing into a clay-containing gypsum slurry a dispersant for a clay-containing gypsum slurry, the dispersant comprising the following component (A):
component (A): a copolymer comprising, as constituent monomers, a constituent monomer (A1) represented by the following general formula (A1) and a constituent monomer (A2) represented by the following general formula (A2),
wherein a proportion of the constituent monomer (A1) to the total amount of the constituent monomers (A1) and (A2) is less than 5 mass%; and
the copolymer has a weight-average molecular weight of 50,000 or more and 250,000 or less: 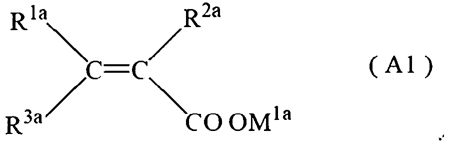
wherein:
R^{1a}, R^{2a}, and R^{3a} are the same or different, and each represent a hydrogen atom, a methyl group, or (CH₂)ᵣCOOM^{2a}; and when (CH₂)ᵣCOOM^{2a} forms an anhydride with COOM^{1a} or another (CH₂)ᵣCOOM^{2a}, M^{1a} and M^{2a} are absent from those groups;
M^{1a} and M^{2a} are the same or different, and each represent a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
r is a number of 0 or more and 2 or less; 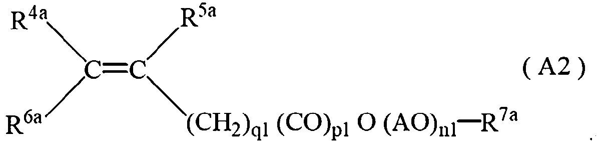
wherein:
R^{4a} and R^{5a} are the same or different, and each represent a hydrogen atom or a methyl group;
R^{6a} is a hydrogen atom, a methyl group, (CH₂)ᵣCOOM^{3a}, or (CH₂)_{q1}(CO)ₚ₁O(AO)ₙ₁R^{7a};
R^{7a} is a hydrogen atom or an alkyl group having 1 or more and 4 or less carbons;
AO is an alkyleneoxy group having 2 or more and 4 or less carbons;
n1 is the average number of added moles of AO, the number being 100 or more and 150 or less;
q1 is a number of 0 or more and 6 or less;
p1 is 0 or 1;
M^{3a} is a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
r is a number of 0 or more and 2 or less.

17. The method for improving the water-reducing ability of a clay-containing gypsum slurry according to claim 16, wherein the dispersant further comprises the following component (B):
component (B): a copolymer comprising, as constituent monomers, a constituent monomer (B1) represented by the following general formula (B1) and a constituent monomer (B2) represented by the following general formula (B2),
wherein a proportion of the constituent monomer (B1) to the total amount of the constituent monomers (B1) and (B2) is 5 mass% or more and less than 13 mass%: 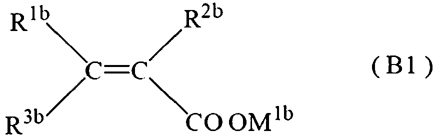
wherein:
R^{1b}, R^{2b}, and R^{3b} are the same or different, and each represent a hydrogen atom, a methyl group, or (CH₂)ᵣCOOM^{2b}; and when (CH₂)ᵣCOOM^{2b} forms an anhydride with COOM^{1b} or another (CH₂)ᵣCOOM^{2b}, M^{1b} and M^{2b} are absent from those groups;
M^{1b} and M^{2b} are the same or different, and each represent a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
r is a number of 0 or more and 2 or less; 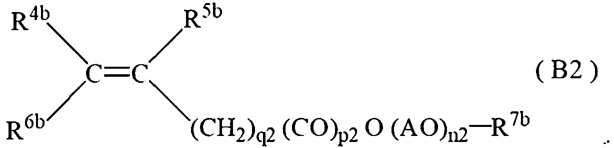
wherein:
R^{4b} and R^{5b} are the same or different, and each represent a hydrogen atom or a methyl group;
R^{6b} is a hydrogen atom, a methyl group, (CH₂)ᵣCOOM^{3b}, or (CH₂)_{q2}(CO)ₚ₂O(AO)ₙ₂R^{7b};
R^{7b} is a hydrogen atom or an alkyl group having 1 or more and 4 or less carbons,
AO is an alkyleneoxy group having 2 or more and 4 or less carbons;
n2 is the average number of added moles of AO, the number being 5 or more and 300 or less,
q2 is a number of 0 or more and 6 or less;
p2 is 0 or 1;
M^{3b} is a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
r is a number of 0 or more and 2 or less.

18. An additive kit for a clay-containing gypsum slurry, the kit consisting of a first agent comprising the following component (A) and a second agent comprising (C) a foaming agent:
component (A): a copolymer comprising, as constituent monomers, a constituent monomer (A1) represented by the following general formula (A1) and a constituent monomer (A2) represented by the following general formula (A2),
wherein a proportion of the constituent monomer (A1) to the total amount of the constituent monomers (A1) and (A2) is less than 5 mass%; and
the copolymer has a weight-average molecular weight of 50,000 or more and 250,000 or less: 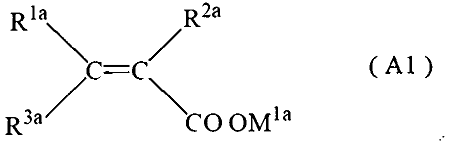
wherein:
R^{1a}, R^{2a}, and R^{3a} are the same or different, and each represent a hydrogen atom, a methyl group, or (CH₂)ᵣCOOM^{2a}; and when (CH₂)ᵣCOOM^{2a} forms an anhydride with COOM^{1a} or another (CH₂)ᵣCOOM^{2a}, M^{1a} and M^{2a} are absent from those groups;
M^{1a} and M^{2a} are the same or different, and each represent a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
r is a number of 0 or more and 2 or less; 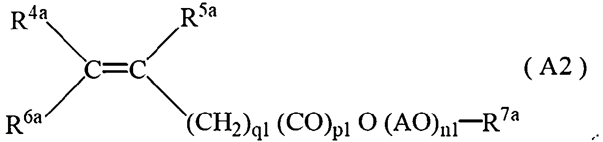
wherein:
R^{4a} and R^{5a} are the same or different, and each represent a hydrogen atom or a methyl group;
R^{6a} is a hydrogen atom, a methyl group, (CH₂)ᵣCOOM^{3a}, or (CH₂)_{q1}(CO)ₚ₁O(AO)ₙ₁R^{7a};
R^{7a} is a hydrogen atom or an alkyl group having 1 or more and 4 or less carbons;
AO is an alkyleneoxy group having 2 or more and 4 or less carbons;
n1 is the average number of added moles of AO, the number being 100 or more and 150 or less;
q1 is a number of 0 or more and 6 or less;
p1 is 0 or 1;
M^{3a} is a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
r is a number of 0 or more and 2 or less.

19. The additive kit for a clay-containing gypsum slurry according to claim 18, wherein the first agent further comprises the following component (B):
component (B): a copolymer comprising, as constituent monomers, a constituent monomer (B1) represented by the following general formula (B1) and a constituent monomer (B2) represented by the following general formula (B2),
wherein a proportion of the constituent monomer (B1) to the total amount of the constituent monomers (B1) and (B2) is 5 mass% or more and less than 13 mass%: 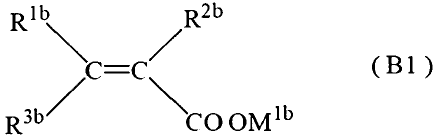
wherein:
R^{1b}, R^{2b}, and R^{3b} are the same or different, and each represent a hydrogen atom, a methyl group, or (CH₂)ᵣCOOM^{2b}; and when (CH₂)ᵣCOOM^{2b} forms an anhydride with COOM^{1b} or another (CH₂)ᵣCOOM^{2b}, M^{1b} and M^{2b} are absent from those groups;
M^{1b} and M^{2b} are the same or different, and each represent a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
r is a number of 0 or more and 2 or less; 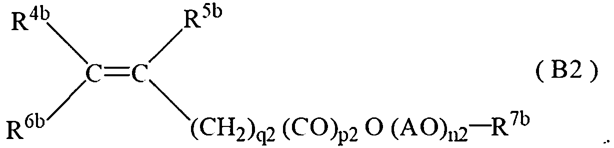
wherein:
R^{4b} and R^{5b} are the same or different, and each represent a hydrogen atom or a methyl group;
R^{6b} is a hydrogen atom, a methyl group, (CH₂)ᵣCOOM^{3b}, or (CH₂)_{q2}(CO)ₚ₂O(AO)ₙ₂R^{7b};
R^{7b} is a hydrogen atom or an alkyl group having 1 or more and 4 or less carbons,
AO is an alkyleneoxy group having 2 or more and 4 or less carbons;
n2 is the average number of added moles of AO, the number being 5 or more and 300 or less,
q2 is a number of 0 or more and 6 or less;
p2 is 0 or 1;
M^{3b} is a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
r is a number of 0 or more and 2 or less.
